(19) Europäisches Patentamt
European Patent Office
Office européen des brevets

(11) **EP 4 423 181 B1**

(12) **EUROPEAN PATENT SPECIFICATION**

(45) Date of publication and mention
of the grant of the patent:
**11.03.2026 Bulletin 2026/11**

(21) Application number: **22814558.7**

(22) Date of filing: **27.10.2022**

(51) International Patent Classification (IPC):
*C08J 11/08* (2006.01)      *B29B 17/02* (2006.01)
*B32B 17/10* (2006.01)      *B32B 3/26* (2006.01)
*B32B 7/12* (2006.01)       *B32B 7/022* (2019.01)
*B32B 27/08* (2006.01)      *B32B 27/22* (2006.01)
*B32B 27/30* (2006.01)      *C08J 11/06* (2006.01)
*C08F 8/28* (2006.01)       *C08F 8/48* (2006.01)

(52) Cooperative Patent Classification (CPC):
(C-Sets available)
**C08J 11/08; B29B 17/02; B32B 3/263; B32B 7/022;
B32B 7/12; B32B 17/10036; B32B 17/10568;
B32B 17/10761; B32B 17/10935; B32B 27/08;
B32B 27/22; B32B 27/30; C08F 8/28;**
B29B 2017/0224; B29B 2017/0293;          (Cont.)

(86) International application number:
**PCT/US2022/047971**

(87) International publication number:
**WO 2023/076441 (04.05.2023 Gazette 2023/18)**

(54) **RECOVERING RECYCLED POLY(VINYL BUTYRAL) POLYMER**

RÜCKGEWINNUNG VON WIEDERVERWENDETEM POLYVINYLBUTYRALPOLYMER

RÉCUPÉRATION DE POLYMÈRE DE POLY(BUTYRAL DE VINYLE) RECYCLÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2021   US 202163263162 P
14.07.2022   US 202263368383 P
28.09.2022   US 202263377410 P
28.09.2022   US 202263377402 P
28.09.2022   US 202263377405 P**

(43) Date of publication of application:
**04.09.2024   Bulletin 2024/36**

(73) Proprietor: **Solutia Inc.
St. Louis, Missouri 63141 (US)**

(72) Inventors:
• **MA, Yinong
Longmeadow, MA 01106 (US)**
• CHEN, Wenjie
Amherst, MA 01002 (US)
• CAMPO, Bert, Jozef
9090 Melle, Oost-vlaanderen (ov) (BE)
• THOMPSON, Helen, M
Verona, WI 53593 (US)

(74) Representative: **Wallinger Ricker Schlotter
Tostmann
Patent- und Rechtsanwälte Partnerschaft mbB
Zweibrückenstraße 5-7
80331 München (DE)**

(56) References cited:
WO-A1-2015/169705      US-A- 3 256 212
US-A- 4 205 146        US-A1- 2009 209 667
US-A1- 2019 106 561

(52) Cooperative Patent Classification (CPC): (Cont.)
B29K 2029/14; B29K 2105/0038; B29L 2031/3052;
B32B 2250/03; B32B 2250/246; B32B 2250/40;
B32B 2272/00; B32B 2305/70; B32B 2307/102;
B32B 2307/412; C08J 2329/14; Y02W 30/62

C-Sets
**C08F 8/28, C08F 216/38**

## Description

## FIELD OF THE INVENTION

The present invention is related to the field of poly(vinyl butyral) resin manufacture, and, specifically, the present invention is in the field of the recovery and reuse of post-industrial and post-consumer poly(vinyl butyral), including methods of recovering post-industrial and post-consumer poly(vinyl butyral).

## DESCRIPTION OF RELATED ART

Laminated glass panels, such as automobile windshields and architectural safety glass, are typically composed of two sheets of glass laminated together with an interposed, plasticized polymer layer, known as an interlayer. Poly(vinyl butyral) ("PVB") is a common polymer that typically forms the main component in the polymeric interlayer of the vast majority of automotive windshields and architectural safety glass. The poly(vinyl butyral) resin is combined with plasticizer, typically before melt extrusion to sheet.

In recent years, multilayer poly(vinyl butyral) interlayers have increasingly been sold to the market for use in laminated safety glass. A multilayer interlayer can provide enhanced sound insulation due to the presence of a softer layer in the center of the sheet (the "core layer"). Typically, the core layer composition is different from the composition of the outer layers (the "skin layers") in terms of the amount of plasticizer relative to the amount of polymer. The plasticizer content is typically higher in the core layer than it is in the skin layers. In addition, the chemical composition of the PVB resin in the core layer is different from that of the PVB resin in the skin layers in terms of hydroxyl content, possibly also in terms of residual poly(vinyl acetate) content.

Trilayer acoustic interlayer, one common form of conventional multilayer interlayers, contain a soft core layer consisting of a single poly(vinyl butyral) ("PVB") resin having a low residual hydroxyl content and a high amount of a conventional plasticizer, and two stiff skin layers having significantly higher residual hydroxyl content (see, for example U.S. Patents 5,340,654, 5,190,826, and 7,510,771). Interlayers having the reverse configuration, that is, with one stiff layer sandwiched between two more soft layers have been found to improve the impact performance of the glass panel and can also be designed for sound insulation.

Commonly, PVB resin is manufactured through a synthesis process that begins with the separation of ethane directly from natural gas or from the petroleum refining process. Ethane is then steam cracked to produce ethene (ethylene), which, along with acetic acid feedstock, is used to produce vinyl acetate monomers. Vinyl acetate monomers, through free-radical polymerization, are polymerized to poly(vinyl acetate). Poly(vinyl acetate) is hydrolyzed or via trans-esterification using methanol and ethanol, to poly(vinyl alcohol), which is then reacted with butyraldehyde to form poly(vinyl butyral). This synthesis process for PVB resin is energy intensive and dependent upon the use of non-renewable feedstocks. Consequently, the prospect of recycling PVB resin from post-industrial and post-consumer recycled PVB has been long considered in the art as a potentially valuable source of PVB that would be less costly to produce than virgin PVB resin and that could significantly reduce the environmental footprint of PVB production. Exemplary sources of post-industrial include PVB rolls that are out of specification, damaged, or otherwise unusable, as well as PVB from damaged or defective postindustrial laminated glass. Exemplary sources of post-consumer, recycled PVB include previously-used automotive windshields and architectural safety glass, as well as other previously-used consumer products such as electric power devices (e.g., solar photovoltaic devices) and electronic display devices.

Trims and off-grade homogeneous, monolayer grades of poly(vinyl butyral) sheet products can sometimes be directly re-used in the sheet manufacturing process. However, both post-industrial and post-consumer PVB generally comprises different mixtures of distinct PVB compositions, as obtained from various products and/or differing manufacturers, as well as additives such as plasticizer, UV absorbers, solar absorbers and the like. As a result, post-industrial and/or post-consumer PVB mixtures may comprise PVB of different poly(vinyl butyral) compositions, including different polyvinyl alcohol contents. Such compositional differences within the mixtures of recycled PVB invariably lead to unacceptable high haze and/or discoloration of the PVB despite the PVB being removed of other contaminants. Specifically, when PVB materials of significant compositional difference are mixed together, the chemical incompatibility results in hazy or cloudy material due to immiscible microdomains with different refractive indices, which greatly limits its reuse as an interlayer for automobile windshields and architectural safety glass applications. Thus, despite the long felt need in the art, there are several problems with recycling PVB.

Likewise, multilayer interlayers have limited recyclability in the direct extrusion process since the different layers typically have compositions that are too different from each other. Acoustic core layers especially do not mix well with the two skin layer materials during extrusion, forming small but discrete domains of core material that cause a certain level of haze, limiting its content in extrusion. This causes a specific type of haze to be visible in the laminated glass containing a PVB sheet for which pieces of a multilayer sheet have been used in the raw material feed, which makes a product with inferior visual quality that is not appropriate for sales in the market or that does not meet certain quality requirements of the particular products. The inability to recycle this multilayer material is a significant economic loss. Maximizing reuse of multilayer scrap, trim and recycled PVB is thus not only a competitive advantage, but it is also an environmentally sound practice.

In view of the above, there exists a need to process post-industrial and/or post-consumer PVB in a manner that can separate the core layer from the skin layer in multilayer interlayers as well as remove the plasticizer from the recycled PVB material, such that the resulting PVB obtained from the skin layer is a clear polymer that can be used to make new PVB resin and interlayers, such as may be incorporated within new laminated glass panels.

US 2009/209667 A1 discloses a method of recycling poly(vinyl butyral) resin and incorporating that poly(vinyl butyral) resin into laminated glass and other articles. Poly(vinyl butyral) resin is recovered from discarded laminated glass through a process that includes all or most of the steps of granulation of the laminated glass, solvent extraction of plasticizer and impurities, dissolution of poly(vinyl butyral), pre-filtration of insoluble contaminants, color removal via adsorption or bleaching, post-filtration of carbon particles, precipitation of poly(vinyl butyral), and washing, stabilization, and drying of poly(vinyl butyral) resin.

## BRIEF DESCRIPTION OF THE DRAWINGS

FIG. 1 is a flowchart of a method for recovering PVB according to embodiments of the present invention;

FIG. 2 is a GPEC chromatogram showing recycled PVB extracts in ethanol with 9 wt.% (top), 16 wt.% (middle) and 20 wt.% (bottom) water;

FIG. 3 is a GPEC chromatogram showing recycled PVB extracts in methanol with 0 wt.% (top), 9.5 wt.% (middle) and 4.9 wt.% (bottom) water;

FIG. 4 is a GPEC chromatogram showing recycled PVB extracts in isopropanol with 0 wt.% (top) and 32 wt.% water (bottom);

FIG. 5 is a schematic of the process for selective dissolution of recycled PVB resin and separation via filtration;

FIG. 6 is a GPEC chromatogram of a suspension sample after dissolution with methanol with 4 wt.% water (top), starting mixture (middle), and the end filtrate sample (bottom);

FIG. 7 is a GPEC chromatogram of a suspension sample after dissolution with ethanol with 20 wt.% water (top), and the combined filtrates (bottom);

FIG. 8 is a schematic of the process for selective dissolution of recycled PVB Flakes and separation via straining and washing or centrifuging and washing;

FIG. 9 is a GPEC chromatogram showing recycled PVB in ethanol with the starting material (recycle pellets in ethanol) (top), the supernatants after centrifugation (middle) and the sediment material showing mostly core resin (bottom);

FIG. 10 is a GPEC chromatogram showing recycled PVB Pellets in ethanol with the supernatants after centrifugation (top), and recycled PVB Flakes in ethanol with the supernatants after centrifugation (bottom);

FIG. 11 is a GPEC chromatogram showing recycled PVB Pellets at 10 wt.% in ethanol with the supernatants after the first centrifugation (top) and at 5 wt.% with the supernatants after the first centrifugation (bottom);

FIG. 12 is a GPEC chromatogram showing recycled PVB Pellets at 5 wt.% in ethanol with the supernatants after the first centrifugation (top) and the supernatants after the second centrifugation (bottom);

FIG. 13 is a GPEC chromatogram showing recycled PVB Pellets at 10 wt.% in ethanol with the supernatants after the first centrifugation (top) and the supernatants after the second centrifugation (bottom);

FIG. 14 is a schematic illustration of a laminated glass panel comprising a pair of glass plates opposing a polymer interlayer, with the polymer interlayer comprising a trilayer with a pair of skin layers opposing a core layer; and

FIG. 15 is another schematic illustration of a laminated glass panel comprising a pair of glass plates opposing a polymer interlayer, with the polymer interlayer having a wedge shape.

## SUMMARY

The invention is defined in claim 1. Preferred embodiments are defined in the claims depending thereon.

One aspect of the present disclosure concerns a method of recovering poly(vinyl butyral) (PVB), said method comprising the steps of: (a) providing a solvent to a reclamation system; (b) adding recycled PVB to the solvent and stirring to form a PVB mixture, wherein the PVB mixture comprises a liquid portion comprising dissolved high PVOH PVB resin and plasticizer, and a solid portion comprising low PVOH PVB solids; and (c) filtering the PVB mixture to remove the low PVOH PVB solids. The removed low PVOH PVB solids may comprise residual high PVOH PVB resin and plasticizer. The method may further comprise a step (d) of separating the residual high PVOH PVB resin and plasticizer from the low PVOH PVB solids.

Another aspect of the present disclosure concerns a method of recovering poly(vinyl butyral) (PVB), said method comprising the steps of: (a) providing a solvent to a reclamation system; (b) adding recycled PVB to the solvent and stirring to form a PVB mixture, wherein the PVB mixture comprises a liquid portion comprising dissolved high PVOH PVB resin and plasticizer, and a solid portion comprising low PVOH PVB solids; and (c) filtering the PVB mixture to remove the low PVOH PVB solids, wherein the removed low PVOH solids comprise residual high PVOH PVB resin and plasticizer. he removed low PVOH PVB solids may comprise residual high PVOH PVB resin and plasticizer. The method may further comprise a step (d) of separating the residual high PVOH PVB resin and plasticizer from the low PVOH PVB solids. The low PVOH solids may comprise less than 20% (15%, 10%, 5%, 4%, 3%, 2%, 1%) of the high PVOH PVB resin from the recycled PVB.

One aspect of the present disclosure concerns a method of recovering poly(vinyl butyral) (PVB) from the skin of a trilayer interlayer. This method is more suited for material with compositions well dispersed in the feeds, such as material extruded and pelletized from recycled multilayer PVB interlayers. The method comprises a step of providing a solvent to a reclamation system. An additional step includes adding a recycled PVB to the solvent and stirring at a certain temperature for a specified time to form a PVB mixture. The PVB mixture is stirred to dissolve the PVB resin with the higher poly(vinyl alcohol) ("PVOH") level (referred to herein as the high PVOH PVB resin) and plasticizer while retaining the PVB resin with the lower PVOH level (referred to herein as low PVOH PVB resin) as a solid. In many cases, the high PVOH resin is present in the skin or outer layer(s) of a multilayer interlayer. An additional step includes filtering and/or optionally centrifuging the PVB mixture to remove the low PVOH PVB solids from the solution. The steps may be repeated multiple times, such as until the high PVOH PVB (skin) resin and plasticizer are completely dissolved. A further step includes subjecting the solution to further processing, such as evaporation, vacuum and/or heat or other process known to one skilled in the art to obtain recovered high PVOH PVB polymer containing plasticizer. A further step may include separating the plasticizer from the recovered high PVOH PVB polymer.

Another aspect of the present disclosure concerns a recovered poly(vinyl butyral) (PVB) polymer. The recovered PVB polymer is produced by a method comprising a step of providing a solvent to a reclamation system. An additional step includes adding a recycled PVB to the solvent and stirring at a certain temperature for a specified time to form a PVB mixture. The PVB mixture is stirred to dissolve the high PVOH PVB (skin) resin and plasticizer while retaining the low PVOH PVB (core) resin as a solid. An additional step includes filtering and/or optionally centrifuging the PVB mixture to remove the low PVOH PVB solids from the solution. The steps may be repeated multiple times, such as until the high PVOH PVB (skin) resin and plasticizer are completely dissolved. A further step includes subjecting the solution to further processing, such as evaporation, vacuum and/or heat or other process known to one skilled in the art to obtain recovered high PVOH PVB polymer containing plasticizer. A further step may include separating the plasticizer from the recovered high PVOH PVB polymer.

Another aspect of the present disclosure concerns a laminated glass panel comprising an interlayer including recovered poly(vinyl butyral) (PVB). The recovered PVB is produced by a method comprising a step of providing a solvent to a reclamation system. An additional step includes adding a recycled PVB to the solvent and stirring at a certain temperature for a specified time to form a PVB mixture. The PVB mixture is stirred to dissolve the high PVOH PVB (skin) resin and plasticizer while retaining the low-PVOH PVB (core) resin as a solid. An additional step includes filtering and/or optionally centrifuging the PVB mixture to remove the low PVOH PVB solids from the solution. The steps may be repeated multiple times, such as until the high PVOH PVB (skin) resin and plasticizer are completely dissolved. A further step includes subjecting the solution to further processing, such as evaporation, vacuum and/or heat or other process known to one skilled in the art to obtain recovered high-PVOH PVB polymer containing plasticizer. A further step may include separating the plasticizer from the recovered high PVOH PVB polymer.

One aspect of the present disclosure concerns a method of recovering poly(vinyl butyral) (PVB) from the skin of a trilayer interlayer. This method is more suited for feeds that are still in layered form such as comminuted multilayer interlayer material in which the undissolved material can maintain a certain form and size during the operations. The method comprises a step of providing a solvent to a reclamation system. An additional step includes adding a recycled PVB to the solvent and stirring at a certain temperature for a specified time to extract the high PVOH PVB (skin) resin and plasticizer while retaining the low PVOH PVB (core) resin as a solid. An additional step includes collecting the low PVOH PVB resin on a coarse screen. The steps may be repeated multiple times, such as until the high PVOH PVB (skin) resin and plasticizer are completely extracted. A further step includes subjecting the extract to further processing, such as evaporation, vacuum and/or heat or other process known to one skilled in the art to obtain recovered high PVOH PVB polymer containing plasticizer. A further step may include separating the plasticizer from the recovered high PVOH PVB polymer.

Another aspect of the present disclosure concerns a recovered poly(vinyl butyral) (PVB) polymer. The recovered PVB polymer is produced by a method comprising a step of providing a solvent to a reclamation system. An additional step includes adding a recycled PVB to the solvent and stirring at a certain temperature for a specified time to extract the high PVOH PVB (skin) resin and plasticizer while retaining the low PVOH PVB (core) resin as a solid. An additional step includes collecting the low PVOH PVB resin on a coarse screen. The steps may be repeated multiple times, such as until the high PVOH PVB (skin) resin and plasticizer are completely extracted. A further step includes subjecting the extract to further processing, such as evaporation, vacuum and/or heat or other process known to one skilled in the art to obtain recovered high PVOH PVB polymer containing plasticizer. A further step may include separating the plasticizer from the recovered high PVOH PVB polymer.

Another aspect of the present disclosure concerns a laminated glass panel comprising an interlayer including recovered poly(vinyl butyral) (PVB). The recovered PVB is produced by a method comprising a step of providing a solvent to a reclamation system. An additional step includes adding a recycled PVB to the solvent and stirring at a certain temperature for a specified time to extract the high PVOH PVB (skin) resin and plasticizer while retaining the low PVOH (core) resin as a solid. An additional step includes collecting the low PVOH PVB resin on a coarse screen. The steps may be repeated multiple times, such as until the high PVOH PVB (skin) resin and plasticizer are completely extracted. A further step includes subjecting the extract to further processing, such as evaporation, vacuum and/or heat or other process known to one skilled in the art to obtain recovered high-PVOH PVB polymer containing plasticizer. A further step may include separating the plasticizer from the recovered high-PVOH PVB polymer.

Another aspect comprises further processing the recovered high PVOH PVB polymer, such as in a re-acetalization process. Further processing the recovered high PVOH PVB may include the step of adding the recovered PVB polymer to a solvent, such as alcohol, and stirring at a certain temperature with a certain amount of catalyst and a certain amount of butyraldehyde for a specified time to dissolve and allow the recovered high PVOH PVB polymer to equilibrate to a PVB solution. An additional step includes filtering the PVB solution to remove the undissolved solids. An additional step includes neutralizing the PVB solution with a base, such as potassium hydroxide (KOH). An additional step includes subjecting the neutralized PVB solution to precipitation and washing with water to remove the solvent to obtain PVB solids. A further step includes filtering the PVB solids obtained and drying the filtered PVB solids to obtain recovered PVB polymer. In embodiments, the PVB polymer may be a single composition (i.e., known or homogeneous, such as from a single source and having the same or similar properties, such as the same residual hydroxyl level). In other embodiments, the PVB polymer may be a non-homogeneous composition from multiple or unknown sources.

Another aspect comprises further processing the recovered high PVOH PVB polymer that is a single polymer composition. If the PVB polymer is a single (i.e., known or homogeneous) composition, the recovered PVB polymer can be directly processed. Further processing the recovered PVB may include the additional step of adding the recovered PVB polymer to a solvent, such as alcohol, and stirring at a certain temperature until the recovered PVB polymer is fully dissolved to form a PVB solution. An additional step includes filtering the PVB solution to remove the undissolved solids. An additional step includes subjecting the PVB solution to precipitation and washing with water to remove the solvent to obtain PVB solids. A further step includes filtering the PVB solids obtained and drying the filtered PVB solids to obtain recovered PVB polymer wherein the recovered PVB polymer is a single or homogeneous composition. Alternatively, instead of the precipitation, an additional step after filtration includes evaporation of the solvent to obtain recovered PVB polymer wherein the recovered PVB polymer is a single or homogeneous composition.

Another aspect comprises further processing the recovered low PVOH PVB polymer, such as in a re-acetalization process. Further processing the recovered low PVOH PVB may include the step of adding the recovered PVB polymer to a solvent, such as alcohol, and stirring at a certain temperature with a certain amount of catalyst and a certain amount of butyraldehyde for a specified time to dissolve and allow the recovered low PVOH PVB polymer to equilibrate to a PVB solution. An additional step includes filtering the PVB solution to remove the undissolved solids. An additional step includes neutralizing the PVB solution with a base, such as potassium hydroxide (KOH). An additional step includes subjecting the neutralized PVB solution to precipitation and washing with water to remove the solvent to obtain PVB solids. A further step includes filtering the PVB solids obtained and drying the filtered PVB solids to obtain recovered PVB polymer. In embodiments, the PVB polymer may be a single composition (i.e., known or homogeneous, such as from a single source and having the same or similar properties, such as the same residual hydroxyl level). In other embodiments, the PVB polymer may be a non-homogeneous composition from multiple or unknown sources.

Another aspect comprises further processing the recovered low PVOH PVB polymer that is a single polymer composition. If the PVB polymer is a single (i.e., known or homogeneous) composition, the recovered PVB polymer can be directly processed. Further processing the recovered PVB may include the additional step of adding the recovered PVB polymer to a solvent, such as alcohol, and stirring at a certain temperature until the recovered PVB polymer is fully dissolved to form a PVB solution. An additional step includes filtering the PVB solution to remove the undissolved solids. An additional step includes subjecting the PVB solution to precipitation and washing with water to remove the solvent to obtain PVB solids. A further step includes filtering the PVB solids obtained and drying the filtered PVB solids to obtain recovered PVB polymer wherein the recovered PVB polymer is a single or homogeneous composition. Alternatively, instead of the precipitation, an additional step after filtration includes evaporation of the solvent to obtain recovered PVB polymer wherein the recovered PVB polymer is a single or homogeneous composition.

## DETAILED DESCRIPTION

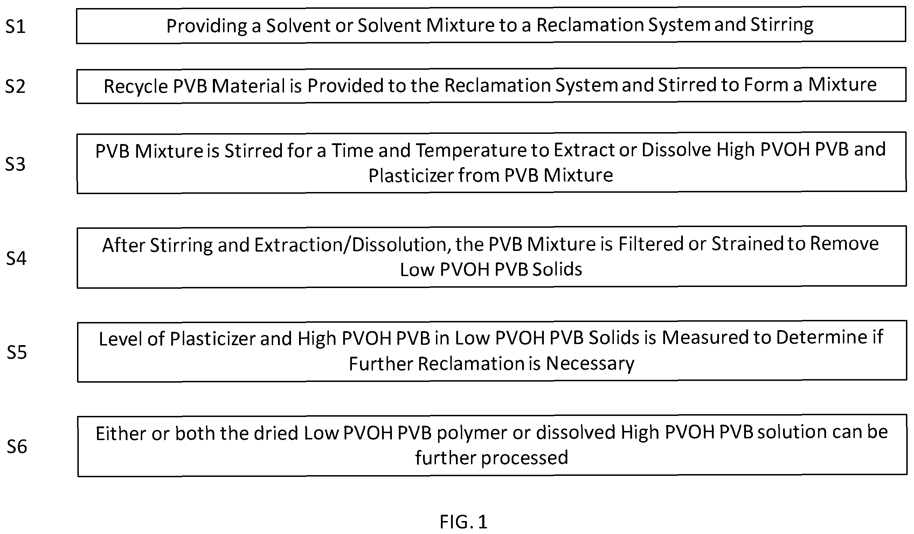

Embodiments of the present invention are directed to methods of recovering, recycling, and/or re-using poly(vinyl butyral) ("PVB"). More particularly, embodiments of the present invention are directed to methods of recycling post-industrial and/or post-consumer, recycled PVB to obtain PVB polymer of sufficient quality that can be used to form polymer interlayers and/or laminated glass panels comprising polymer interlayers or can be used in other processing steps. In more detail, FIG. 1 illustrates an exemplary method of recycling PVB according to embodiments of the present invention. The method includes a step S1 of providing a solvent to a reclamation system. The solvent may be an alcohol or a mixture of an alcohol and water containing a certain amount of water such that the low PVOH PVB is not soluble in the solvent (such as the alcohol or alcohol-water mixture). The solvent or solvent mixture is stirred. The method may include an additional step S2 of adding recycled PVB material to the solvent to form a PVB mixture. This recycled material may take the form of film (that may optionally be chopped, shredded or cut into smaller pieces as further described below), or film that has been extruded into a pellet, or any other structure derived from the starting multilayer film. The recycled PVB may include at least some plasticizer. An additional step S3 may comprise stirring the PVB mixture for a specified time at a specified temperature to allow the high PVOH PVB and plasticizer to be dissolved or extracted from the recycled PVB to form a mixture of liquids and low PVOH PVB solids. An additional step S4 may comprise filtering the PVB mixture to remove the low PVOH PVB solids. This version of step S4 is more appropriate if the starting materials was in the form of an extruded pellet. Alternatively, step S4 may comprise passing the solution containing the low PVOH solids through a screen (such as a coarse screen) to remove the low PVOH PVB solids. Generally, using a screen in step S4 is more appropriate if the starting material is in film form instead of pelletized form.

An additional step S5 may comprise determining the level of plasticizer and high PVOH PVB in the low PVOH PVB solids to determine if further reclamation is needed. If the amount of high PVOH is above the desired level in the low PVOH PVB solids, the process may be repeated by returning the low PVOH PVB solids to step S1 and repeating the steps.

An additional step S6 may comprise processing or treating the removed PVB polymer, either the high PVOH PVB polymer or the low PVOH PVB polymer or both independently, such as rinsing the low PVOH portion with fresh solvent to remove the high PVOH and plasticizer further to improve the separation, or with heat, evaporation and/or vacuum, to form a dried PVB polymer or dissolved PVB solution. Step S6 may optionally comprise further processing of the dried PVB polymer or dissolved PVB solution. The recovered low PVOH PVB polymer will not retain a significant portion of the plasticizer or high PVOH PVB polymer, and it may contain no detectable level of plasticizer and/or high PVOH PVB polymer. The resulting PVB polymer, either the high PVOH PVB polymer or the low PVOH polymer or both independently, which was recovered during the above-described steps, may be further treated, or may be of sufficient quality (e.g., of sufficient clarity and/or color) to be used, in part or completely, in commercial products, such as in the manufacture of polymer interlayers and/or laminated glass panels comprising polymer interlayers, or to be used in a resin manufacturing process and re-acetalized to form PVB resin. The recovered PVB may also be used in other applications, such as adhesives that can be formed with the recovered PVB, as well as flooring, ceramic compositions, binders, coatings, inks, dispersions, and other applications.

The inventors have found that a solvent comprising an alcohol or a mixture of alcohol and water, where the water is present in a certain amount or level (as described below), only dissolves the plasticizer and high PVOH PVB, with minimal dissolution of low PVOH PVB during the process. If too much water is present in the solvent mixture, only the plasticizer will dissolve in the solvent, and if too little water is present in the solvent mixture (depending on the solvent), then all three components - high PVOH PVB, a substantial amount of low PVOH PVB and plasticizer - will dissolve in the solvent. Therefore, the solvent must be prepared and selected with a certain optimal amount of water so that only the high PVOH PVB and plasticizer are dissolved and separated from the low PVOH PVB resin.

Preferred alcohols for the alcohol water solvent mixtures are ethanol, methanol and isopropanol. When the alcohol is ethanol, the optimum range for percent water by weight in the ethanol/water solvent mixture for extraction of plasticizer and high PVOH PVB resin from the recycle PVB is from 16 to 24% by weight water, or from 20 to 24%, or at least 16%, at least 17%, at least 18%, at least 19%, at least 20% or more and no more than 24%, less than 24%, less than 23%, less than 22% or less than 21% water. If the amount of water in the ethanol/water mixture is greater than 24% by weight water, the solubility of the high PVOH PVB resin in the alcohol/water mixture becomes very limited. If the water content in the ethanol/water solvent mixture is below 20%, the low PVOH PVB resin starts to become soluble, and if the water content is less than 16%, the low PVOH PVB resin becomes very soluble.

Similarly, if a solvent mixture of methanol and water is used, the water range is from 4.0 to 6.0%. If the amount of water in the methanol/water mixture is greater than 9.5% by weight water, the solubility of high PVOH PVB in the alcohol/water mixture becomes so low that the solvent is no longer effective for separation of the resins. If the water content in the methanol/water solvent mixture is below 4.0%, the low PVOH PVB resin starts to become soluble, and as the water level decreases to close to 0%, the low PVOH PVB resin becomes increasingly more soluble.

Finally, while a solvent mixture of water and isopropanol can be used, the solubility of the PVB in the solution is low and the high PVOH PVB resin is insufficiently extracted into the solvent relative to the plasticizer when compared to the extraction efficiency and yield of both the ethanol and methanol solvent systems. For this reason, isopropanol is a less suitable alcohol for use than alcohols such as ethanol and methanol in this process, but if isopropanol is used, higher levels or amounts of water in the solvent mixture may be necessary.

While the amount of water used is described as within a specific range, the specific amount of water in each solvent mixture described here and in many of the examples below are appropriate for certain levels of PVOH in the PVB layers (i.e., skin and core layers). For example, some of the recycled PVB material contained skin resin where the high PVOH polymer has a residual PVOH level of 18 to 20 weight percent (wt.%), and in the core resin where the low PVOH polymer has a residual PVOH level of 9 to 11 wt.%. Depending on the compositions of the PVB mixture, the amount of water in the solvent mixtures may need to be increased or decreased accordingly to ensure optimal separation of the components.

Haze is a percentage of transmitted light that is scattered so that its direction deviates more than a specified angle from the direction of the incident beam. Haze may be measured using a haze meter or a spectrophotometer, known to one of skill in the art, and in accordance with ASTM D1003-Procedure B using Illuminant C, at an observer angle of 2 degrees. In some embodiments, glass panels, polymer layers, and/or interlayers that incorporate recovered high PVOH PVB, as described herein, may have a haze value of less than 5 percent, less than about 4 percent, less than about 3 percent, less than about 2 percent, less than about 1, or less than about 0.5 percent.

The recycled PVB provided to the reclamation system of step S2 may comprise post-industrial and/or post-consumer, recycled PVB. Such post-industrial recycled PVB may include PVB rolls that are out of specification, damaged, or otherwise unusable, while such post-consumer recycled PVB may include material recovered from previously manufactured and/or used automotive windshields and architectural safety glass, as well as edge or other trim materials. The recycled PVB material may also include scrap or post-consumer materials from other consumer products such as electric power devices (e.g., solar photovoltaic devices), electronic display devices, etc., as well as other sources.

The recycled PVB materials may have various PVB compositions, such as varying amounts of polyvinyl alcohol ("PVOH") amounts as well as varying amounts and types of plasticizer and other additives. As used herein, low-PVOH PVB polymer refers to a PVB with a residual PVOH content between 8 wt. % and 15 wt.%, or at least 8 wt. %, at least 9 wt.%, at least 10 wt.%, at least 11 wt.%, at least 12 wt.%, at least 13 wt.%, or at least 14 wt.%, or no more than 15 wt.%, or less than 15 wt.%, less than 14 wt.%, less than 13 wt.%, or less than 12 wt.%, while high PVOH PVB polymer refers to a PVB with a residual PVOH content between 17 wt.% and 27 wt.%, or at least 17 wt.%, at least 18 wt.%, at least 19 wt.%, at least 20 wt.%, at least 21 wt.%, at least 22 wt. %, at least 23 wt. %, or at least 24 wt. %, or no more than 27 wt. %, or less than 27 wt.%, less than 26 wt.%, less than 25 wt.%, less than 24 wt.%, less than 23 wt.%, or less than 22 wt.%, although other amounts may be used as appropriate or available. Further, there may be multiple different PVB resins in the recycled PVB. For example, a first portion of the recycled PVB may have a PVOH amount from 9 to 15 wt.%, a second portion of the recycled PVB may have a PVOH amount from 15 to 20 wt.%, and a third portion of the recycled PVB may have a PVOH amount from 20 to 27 wt.%. In general, the recycled PVB may have an amount of PVOH of from 8 to 27 wt.% or more, although other amounts are possible, depending on the starting materials. These PVOH amounts are only for illustrative purposes, and other ranges of PVOH amounts (or different PVOH ranges) may also be possible, depending on the materials used and the sources of the materials.

The recycled PVB may also include an amount of plasticizer (or different amounts of plasticizer, depending on the starting recycled PVB), which is generally used to soften the PVB and/or to lower the glass transition temperature $T_g$ of the PVB. Contemplated plasticizers include, but are not limited to, esters of a polybasic acid, a polyhydric alcohol, triethylene glycol di-(2-ethylbutyrate), triethylene glycol di-(2-ethylhexonate) (known as "3-GEH"), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, and polymeric plasticizers such as oil-modified sebacic alkyds and mixtures of phosphates and adipates, and mixtures and combinations thereof. In some embodiments, 3-GEH is particularly preferred. Other examples of suitable plasticizers can include, but are not limited to, tetraethylene glycol di-(2-ethylhexanoate) ("4-GEH"), di(butoxyethyl) adipate, and bis(2-(2-butoxyethoxy)ethyl) adipate, dioctyl sebacate, nonylphenyl tetraethylene glycol, and mixtures thereof. Generally, the plasticizer content of PVB material (e.g., resin or scrap) will measured in parts per hundred resin parts ("phr"), on a weight per weight basis. For example, if 30 grams of plasticizer is added to 100 grams of polymer resin, the plasticizer content of the resulting plasticized polymer would be 30 phr. The recycled PVB material may have various amounts and/or types of plasticizer.

The recycled PVB material may be cut, chopped, and/or shredded to form small (such as 2 to 20 mm, although other sizes, including up to 1 cm, can be used depending on the equipment and other factors) diameter chips, granules, pellets or flakes of PVB material (wherein the chips, granules, pellets, flakes and the like are referred to herein as "comminuted PVB material"). The comminuted PVB material, such as the flakes, chips and/or pellets, of PVB material may be combined together to form a mixed composition (e.g., having a mixed amount of PVOH or other elements), or comminuted PVB from one source (such as a PVB roll having a known composition) may be used alone. Such comminuted PVB material may be provided to the reclamation system, which may be in the form of a single, batch reactor recycling system or a continuous reclamation recycling system. For example, the single, batch reactor may comprise a tank in the form of a continuous stirred-tank reactor (CSTR) or another similar reactor, such as a counter-current screw press extractor or other equipment known to one of skill in the art. One or more (or all) of the steps of the method described herein may be carried out within the single, batch reactor. Alternatively, a continuous reclamation system may be used, with the continuous reclamation system comprising a plurality of interconnected tanks (e.g., CSTRs) or compartments in a tubular arrangement. In the continuous reclamation system, each of the steps may be independently carried out within one or more of the plurality of tanks or compartments in a tubular arrangement. Benefits of the continuous reclamation system may include higher throughput and higher efficiencies compared to the single, batch reactor.

Turning to step S1, the solvent that is added to the reclamation system (e.g., to the single, batch reactor recycling system or the continuous reclamation recycling system) may comprise various solvents sufficient to selectively dissolve the components of the recycled PVB material and to form a solution or mixture. Examples of suitable solvents may include a mixture of one or more alcohols, e.g., ethanol, methanol or isopropanol, with a sufficient quantity of water to preferentially dissolve one or more components (such as plasticizer and one or more of the PVB resins, and other additives, such as UV absorbers, solar or infrared absorbers, antioxidants and the like) of the recycled PVB. The solvent mixture is configured to selectively dissolve the high PVOH PVB resin (and plasticizer) of the recycled PVB material to form a PVB solution that can be filtered to separate the low PVOH PVB resin from the dissolved high PVOH resin, solvent and plasticizer (and other materials and impurities). The separated or removed low PVOH PVB solids may comprise residual high PVOH PVB resin and plasticizer. The method may further comprise a step (d) of separating the residual high PVOH PVB resin and plasticizer from the low PVOH PVB solids.

Turning to step S2, the recycled PVB is added to the reclamation system (and the solvent) and stirred to form a PVB mixture.

Turning to step S3, the PVB mixture may be stirred for a period of time. The period of time of stirring may be at least 1 hour, at least 2 hours, at least 3 hours, at least 4 hours, at least 5 hours or more, although other times may be appropriate. The mixture may be stirred at room temperature (22 to 23°C), or the mixture may be heated, such as to a temperature of greater than room temperature, such as at least 5°C, at least 10°C, at least 15°C, at least 20°C, at least 25°C, at least 30°C, at least 35°C, at least 40°C, at least 45°C, at least 50°C, at least 55°C, or at least 60°C or more. The stirring time and temperature are selected such that they are effective to extract the plasticizer from the recycled PVB. In some aspects, the stirring temperature is from 10°C to 30°C, or from 15°C to 25°C. In other aspects, the stirring temperature is from t 5°C to 60°C, from 5°C to 50°C, from 5°C to 40°C, from 5°C to 30°C, from 5°C to 20°C, or from 5°C to 10°C.

Turning to step S4, the step comprises filtering the PVB mixture to remove low PVOH PVB polymer solids from the mixture. In some embodiments, the filter may comprise a screen, mesh, cloth, or other similar filtering element. With respect to step S4, the solvent, plasticizer and high PVOH PVB resin (and other impurities) may be removed from the PVB mixture to obtain recovered low PVOH PVB polymer. As will be described in more detail below, the high PVOH PVB may still retain a significant level of the original plasticizer and low PVOH PVB after the initial filtering step. It may then be necessary to return the low PVOH PVB to step S1 or S2 of the reclamation process to dissolve (and extract) the plasticizer and high PVOH PVB resin further. The return to the start of the process may be done one or more times, and in embodiments, the return to the start of the process is repeated until the plasticizer and high PVOH PVB resin is completely removed or to the point of an undetectable level. The recovered PVB may have some remaining plasticizer and high PVOH PVB (if desired), or, after multiple iterations (further described below), there may be no detectable level of plasticizer and high PVOH PVB or very small amounts of plasticizer and high PVOH PVB (i.e., the recovered PVB may retain a small level the original plasticizer and high PVOH PVB included as part of the original recycled PVB).

Turning to step S5, the recovered PVB solids may be analyzed to determine the amount of remaining plasticizer and high PVOH PVB resin in the recovered low PVOH PVB solids, and if the level of plasticizer and high PVOH PVB resin is too high (i.e., above an undetectable level or above the desired level), the recovered low PVOH PVB solids may be returned to the reclamation system after step S1 (where new solvent is added or present in the reclamation system).

Turning to step S6, either the high PVOH PVB polymer, the low PVOH polymer or both independently, may have the solvent (the alcohol and water) removed, such as by drying, evaporating or vacuum removal of the alcohol and water. For example, the recovered PVB solids (high PVOH, low PVOH, or both) may be dried, such as in an oven, for a period of time at a certain temperature to form a dried PVB polymer. The period of time for drying may be at least 1 hour, at least 2 hours, at least 3 hours, at least 4 hours, at least 5 hours, at least 6 hours, at least 7 hours, at least 8 hours, at least 9 hours, at least 10 hours, at least 11 hours, at least 12 hours or more. The temperature for drying may be at least 20°C, at least 25°C, at least 30°C, at least 35°C, at least 40°C, at least 45°C, at least 50°C, at least 55°C, at least 60°C, at least 65°C, at least 70°C or more. The time and temperature for drying may vary depending on the method used for drying or removing the water and alcohol.

In an alternate embodiment, the recovered PVB solids, either the high PVOH PVB polymer, the low PVOH polymer or both independently, may be dissolved in a solvent, such as alcohol, for further processing without the need for drying or removal of the solvent. If the recovered PVB polymer is a known or homogeneous polymer, the recovered PVB polymer can be directly further processed. Further processing the recovered PVB may include the additional step of adding the recovered PVB polymer to a solvent, such as alcohol, and stirring at a certain temperature until the recovered PVB polymer is fully dissolved to form a PVB solution. An additional step includes filtering the PVB solution to remove the undissolved solids. An additional step includes subjecting the PVB solution to precipitation and washing with water to remove the solvent to obtain PVB solids. A further step includes filtering the PVB solids obtained and drying the filtered PVB solids to obtain recovered PVB polymer wherein the recovered PVB polymer is a single or homogeneous composition. Alternatively, instead of the precipitation, an additional step after filtration includes evaporation of the solvent to obtain recovered PVB polymer wherein the recovered PVB polymer is a single or homogeneous composition.

If the recovered PVB, either the high PVOH PVB polymer, the low PVOH polymer or both independently, is a mixed or non-homogenous composition, further processing the recovered PVB may include the step of adding the recovered PVB polymer to a solvent, such as alcohol, and stirring at a certain temperature with a certain amount of catalyst and a certain amount of butyraldehyde for a specified time to dissolve and allow the recovered PVB polymer to equilibrate to a single PVB solution with a specified PVOH%. An additional step includes filtering the PVB solution to remove the undissolved solids. An additional step includes neutralizing the PVB solution with a base, such as potassium hydroxide (KOH), to form a neutralized PVB solution. An additional step includes subjecting the neutralized PVB solution to precipitation and washing with water to remove the solvent to obtain PVB solids. A further step includes filtering the PVB solids obtained and drying the filtered PVB solids to obtain recovered PVB polymer.

The recovered high PVOH PVB polymer may optionally be used in an extrusion process (e.g., via an extruder or co-extruder) to form PVB interlayers and/or laminated glass panels that include PVB interlayers. The resulting recovered high PVOH PVB polymer may be of sufficient quality and/or clarity to be used in commercial products, such as in the manufacture of polymer interlayers and/or laminated glass panels comprising polymer interlayers, especially for the cases of post-industrial recycled material.

The recovered low PVOH PVB polymer may also optionally be used in an extrusion process (e.g., via an extruder or co-extruder) to form PVB interlayers and/or laminated glass panels that include PVB interlayers. However, notably, the recovered low PVOH PVB polymer may retain very little or even none of the plasticizer that was originally included in the recycled PVB. For example, in some embodiments, the recovered low PVOH PVB polymer may retain no more than 5%, no more than 4%, no more than 3%, no more than 2%, no more than 1.5%, no more than 0.5%, or 0% (or a level that is not detectable) of the plasticizer included in the original recycled PVB. Therefore, additional plasticizer may need to be added prior to extrusion or other further processing.

In certain embodiments, variations, additions, and/or subtractions may be made to the steps S1 to S6 described above. Additionally, the recovered PVB polymer (the high PVOH PVB and/or the low PVOH PVB) may be subjected to further treatment, as described previously.

Additionally, the low PVOH PVB resin can also be separated from the solution using centrifugation, in addition to the steps described above. First, the interlayers are treated with a solvent system that dissolves only one of the two resins in the mixture (as described above) and then the resulting suspension is subjected to centrifugation to promote separation. Complete removal or partial removal of one component (such as the high or low PVOH PVB resin) can help reduce haze for recycling.

The PVB that was recovered using the recovering method steps described above may be used to form a resin, resin layer, polymer interlayer and/or a laminated glass panel comprising a polymer interlayer. The terms "polymer interlayer sheet," "interlayer," "polymer layer", and "polymer melt sheet" as used herein, may designate a single-layer sheet or a multilayered interlayer. A "single-layer sheet," as the name implies, is a single polymer layer extruded as one layer. A multilayered interlayer, on the other hand, may comprise multiple layers, including separately extruded layers, co-extruded layers, or any combination of separately and co-extruded layers. Thus, the multilayered interlayer could comprise, for example: two or more single-layer sheets combined together ("plural-layer sheet"); two or more layers co-extruded together ("co-extruded sheet"); two or more co-extruded sheets combined together; a combination of at least one single-layer sheet and at least one co-extruded sheet; and a combination of at least one plural-layer sheet and at least one co-extruded sheet. In various embodiments of the present invention, a multilayered interlayer comprises at least two polymer layers (e.g., a single layer or multiple layers co-extruded) disposed in direct contact with each other, wherein each layer comprises a polymer resin. The term "resin," as utilized herein refers to the polymeric component (e.g., PVB) removed from the mixture that results from the acid catalysis and subsequent neutralization of polymeric precursors. Generally, plasticizer, such as those discussed more above, will be added to the resins to result in a plasticized polymer. Additionally, resins may have other components in addition to the polymer and plasticizer including; e.g., acetates, salts and alcohols.

Although the above described recycling steps can be performed to yield recovered PVB with at least some inherent plasticizer (e.g., 3 to 5 phr of plasticizer), embodiments may require additional plasticizer to be added to the PVB before the PVB is used to form a polymer interlayer and/or a laminated glass panel comprising a polymer interlayer. For example, in some embodiments, an additional amount of from 25 to 50 phr, 25 to 45 phr, 30 to 40 phr, or 33 to 35 phr may be added to the resulting PVB before the polymer interlayer and/or the laminated glass panel is manufactured. In other embodiments, an additional amount of less than 25 phr, or less than 20 phr or less, or greater than 50 phr, or greater than 55 phr, or greater than 60 phr, or greater than 65 phr, or greater than 70 phr or more may be added to the resulting PVB before the polymer interlayer and/or the laminated glass panel is manufactured. Higher or lower amounts of plasticizer may be added as desired, depending on the desired properties and application. For the high PVOH PVB resin, additional resin may be added to control or reduce the level of plasticizer in the resin.

The recovered PVB resin (or resins) typically has a molecular weight of greater than 30,000 Daltons, or less than 500,000 Daltons, or 30,000 to 500,000 Daltons, or 500,000 to 500,000 Daltons, or 100,000 to 425,000 Daltons, as measured by size exclusion chromatography using low angle laser light scattering. As used herein, the term "molecular weight" means the weight average molecular weight.

Once a sufficient amount of plasticizer is added to the recovered low PVOH PVB resin, or alternatively additional resin is added to the high PVOH PVB resin (if needed), it is contemplated that polymer interlayer sheets may be produced by any suitable process known to one of ordinary skill in the art of producing polymer interlayer sheets that are capable of being used in a multiple layer panel (such as a glass laminate). For example, it is contemplated that the polymer interlayer sheets may be formed through solution casting, compression molding, injection molding, melt extrusion, melt blowing or any other procedures for the production and manufacturing of a polymer interlayer sheet known to those of ordinary skill in the art. Further, in embodiments where multiple polymer interlayers are utilized, it is contemplated that these multiple polymer interlayers may be formed through co-extrusion, blown film, dip coating, solution coating, blade, paddle, air-knife, printing, powder coating, spray coating or other processes known to those of ordinary skill in the art. While all methods for the production of polymer interlayer sheets known to one of ordinary skill in the art are contemplated as possible methods for producing the polymer interlayer sheets described herein, this application will focus on polymer interlayer sheets produced through extrusion and/or co-extrusion processes.

In the extrusion process, thermoplastic resin and plasticizers, including any of those resins and plasticizers described above, are generally pre-mixed and fed into an extruder device. Additives such as colorants and UV inhibitors (in liquid, powder, or pellet form) may be used and can be mixed into the thermoplastic resin or plasticizer prior to arriving in the extruder device. These additives are incorporated into the thermoplastic polymer resin, and by extension the resultant polymer interlayer sheet, to enhance certain properties of the polymer interlayer sheet and its performance in the final multiple layer glass panel product.

In the extruder device, the particles of the thermoplastic raw material and plasticizers, including any of those resins, plasticizers, and other additives described above, are further mixed and melted, resulting in a melt that is generally uniform in temperature and composition. Embodiments of the present invention may provide for the melt temperature to be approximately 200°C. Once the melt reaches the end of the extruder device, the melt is propelled into the extruder die. The extruder die is the component of the extruder device which gives the final polymer interlayer sheet product its profile. The die will generally have an opening, defined by a lip, that is substantially greater in one dimension than in a perpendicular dimension. Generally, the die is designed such that the melt evenly flows from a cylindrical profile coming out of the die and into the product's end profile shape. A plurality of shapes can be imparted to the end polymer interlayer sheet by the die so long as a continuous profile is present. Generally, in its most basic sense, extrusion is a process used to create objects of a fixed cross-sectional profile. This is accomplished by pushing or drawing a material through a die of the desired cross-section for the end product.

In some embodiments, a co-extrusion process may be utilized. Co-extrusion is a process by which multiple layers of polymer material are extruded simultaneously. Generally, this type of extrusion utilizes two or more extruders to melt and deliver a steady volume throughput of different thermoplastic melts of different viscosities or other properties through a co-extrusion die into the desired final form. For example, the multiple layer interlayers of the present invention (e.g., in the form of a trilayer interlayer) may be preferably co-extruded using a multiple manifold co-extrusion device which includes a first die manifold, a second die manifold, and a third die manifold. The co-extrusion device may operate by simultaneously extruding polymer melts from each manifold through a die and out of an opening, where the multiple layer interlayer is extruded as a composite of three individual polymer layers. The polymer melts may flow through the die such that the core layer is positioned between the skin layers, so as to result in the manufacture of a trilayer interlayer with the core layer sandwiched between the skin layers. The die opening may include a pair of lips positioned on either side of the opening. Given the positional orientation of the polymer melts, the skin layers may come into contact with the lips. Regardless, the interlayer thickness can be varied by adjusting the distance between die lips located at the die opening.

Often, polymer interlayers having three layers will be used in the manufacture of a laminated glass panel. For example, in some embodiments of this application, the increased acoustic attenuation properties of soft layers are combined with the mechanical strength of stiff/rigid layers to create a multilayered interlayer. In these embodiments, a central soft layer is sandwiched between two stiff/rigid outer layers. This configuration of (stiff)//(soft)//(stiff) creates a multilayered interlayer that is easily handled, can be used in conventional lamination methods and that can be constructed with layers that are relatively thin and light. The soft, core layer is generally characterized by a lower residual hydroxyl content, a higher plasticizer content, and/or a lower glass transition temperature than the relatively stiffer, skin layers.

The following offers a simplified description of the manner in which multiple layer glass panels are generally produced in combination with the interlayers formed according to the processes described above. First, as discussed above, a multiple layer interlayer may be co-extruded using a multiple manifold co-extrusion device. The device operates by simultaneously extruding polymer melts from each manifold toward an extrusion opening. Properties of the layers can be varied by adjusting attributes (e.g., temperature and/or opening dimensions) of the die lips at the extrusion opening. Once formed, the interlayer sheet can be placed between two glass substrates and any excess interlayer is trimmed from the edges, creating an assembly. It is not uncommon for multiple polymer interlayer sheets or a polymer interlayer sheet with multiple layers (or a combination of both) to be placed within the two glass substrates creating a multiple layer glass panel with multiple polymer interlayers. Then, air is removed from the assembly by an applicable process or method known to one of skill in the art; e.g., through nip rollers, vacuum bag or another deairing mechanism. Additionally, the interlayer is partially press-bonded to the substrates by any method known to one of ordinary skill in the art. In a last step, in order to form a final unitary structure, this preliminary bonding is rendered more permanent by a high temperature and pressure lamination process, or any other method known to one of ordinary skill in the art such as, but not limited to, autoclaving.

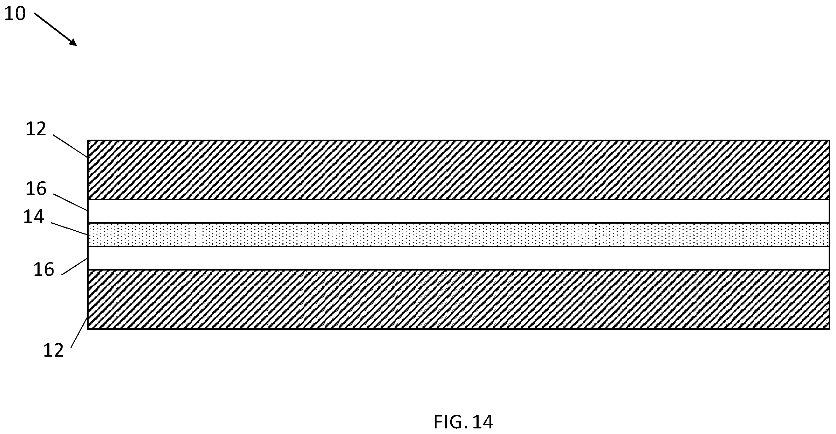

In view of the above, multiple layer panels are comprised of two sheets of glass, or other applicable substrates, with a polymer interlayer sheet or sheets sandwiched there-between. Multiple layer panels are generally produced by placing at least one polymer interlayer sheet between two substrates to create an assembly. FIG. 14 illustrates a multiple layer panel 10 comprising a pair of glass sheets 12 with a multilayered interlayer sandwiched therebetween. The multilayered interlayer is configured as a trilayer interlayer having three individual polymer interlayer sheets, including a soft core layer 14 and two relatively stiffer skin layers 16 positioned on either side of the core layer 14. Such glass panels that incorporate such a trilayer may, as discussed above, have superior acoustic properties due to the sound dampening provided by the soft, core layer.

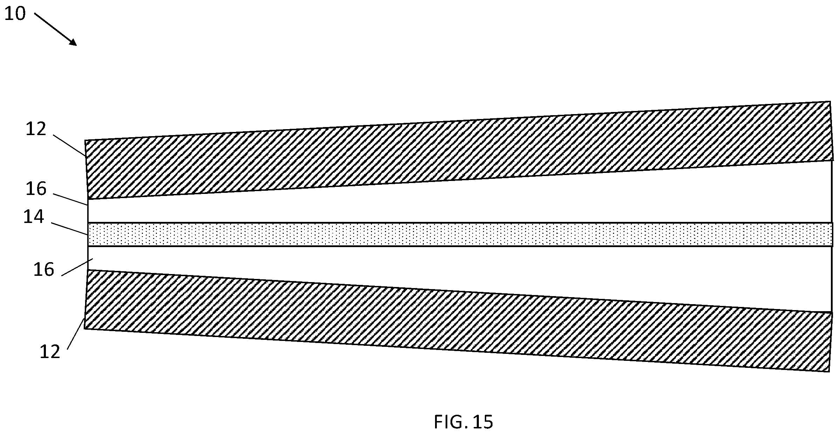

In some embodiments, the interlayer (e.g., the core layer 14 and the skin layers 16) will have a generally constant or uniform thickness about the length of the interlayer (see, e.g., FIG. 14). However, in alternative embodiments, as shown in FIG. 15, the interlayer may have at least one region of non-uniform thickness. For example, the interlayer, comprised of the core layer 14 and skin layers 16, may be wedge-shaped, such that the thickness of the interlayer changes (e.g., linearly) about the length of the interlayer. In some such embodiments, the thickness of the interlayer may change due to a thickness change in the core layer 14 (i.e., with the skin layers 16 having a generally constant thickness). Alternatively, the thickness of the interlayer may change due to a thickness change in the skin layers 16 (i.e., with the core layer 14 having a generally constant thickness). In further alternatives, the thickness of the interlayer may change due to a thickness change in both the core layer 14 and the skin layers 16. In further embodiments (not shown), one or more layers may increase in thickness in the cross machine direction of the interlayer while one or more layers are concurrently reduced in thickness, while maintaining an interlayer having at least one region of non-uniform thickness, such as a wedge-shaped interlayer. Such glass panels that incorporate such a trilayer may, as discussed above, have superior acoustic properties due to the sound dampening provided by the soft, core layer. In addition, due to the non-uniform thickness of the trilayer, the glass panels may provide beneficial characteristics for use in heads-up displays ("HUDs") by reducing unwanted image projection defects (e.g., reducing ghost images).

While the invention has been disclosed in conjunction with a description of certain embodiments, including those that are currently believed to be the preferred embodiments, the detailed description is intended to be illustrative and should not be understood to limit the scope of the present disclosure. As would be understood by one of ordinary skill in the art, embodiments other than those described in detail herein are encompassed by the present invention. Modifications and variations of the described embodiments may be made without departing from the spirit and scope of the invention.

It will further be understood that any of the ranges, values, or characteristics given for any single component of the present disclosure can be used interchangeably with any ranges, values or characteristics given for any of the other components of the disclosure, where compatible, to form an embodiment having defined values for each of the components, as given herein throughout. For example, a polymer layer can be formed comprising plasticizer content in any of the ranges given in addition to any of the ranges given for residual hydroxyl content, where appropriate, to form many permutations that are within the scope of the present invention but that would be cumbersome to list.

## EXAMPLES

### Materials

The following materials were used in the examples below.

PVB Flake (also referred to as PVB sheet, is a trilayer PVB sheet that has been cut into smaller flakes or pieces. The PVB Flake used contains about 10 to 15 wt.% low PVOH PVB resin and about 85 to 90 wt.% high PVOH PVB resin on a resin-only basis (excluding plasticizer in the flake or sheet). In many Examples, the PVB Flake may be Saflex® Q Series Acoustic PVB sheet that is being recycled from Eastman Chemical Company that has been cut or chopped into smaller flakes.

PVB Pellets are pellets that comprise the PVB Flake (including Saflex® Q Series Acoustic PVB) that has been run through an extruder and pelletized. Typically, due to the low content of the low PVOH PVB (core) resin in the pellets, the pellets comprise small domains dispersed in the high PVOH PVB (skin) resin matrix.

Recycle PVB1 is a first sample of post-consumer PVB sheet with unknown or unmeasured content that was purchased from Recyverre. This material was chopped, shredded or ground up to form small pieces or flakes of material.

Recycle PVB2 is a second sample of post-consumer PVB sheet with unknown or unmeasured content that was purchased from Recyverre. This material was chopped, shredded or ground up to form small pieces or flakes of material.

**Examples to Illustrate Solubility in the AlcohollWater Mixtures**

Gradient polymer elution chromatography (GPEC) is a technique that can provide information on the composition of a copolymer or terpolymer and the concentration of the polymer components, including the amount of plasticizer. The GPEC method involves first dissolving the polymer (i.e., PVB) in a good solvent or using extracts if the concentration of the extracted components are of interest. The dissolved sample or solution is injected onto the column under solvent conditions where the polymer precipitates. The mobile phase is then changed to a gradient whereby the polymer will elute as it re-dissolves. In the case of PVB, the primary separation mechanism is believed to be the solubility of the PVB fractions in the mobile phase so that plasticizer is eluted first due to its high solubility in the solvents and lower molecular weight. There may also be a separation mechanism due to the interaction of the PVB with the column packing. Although there may be multiple factors influencing the separation, it is believed that the copolymer composition is the largest contributor. The GPEC method may be used to determine the polymer composition, or in this case, to determine the concentration of resins and plasticizer in the samples.

Experimental Conditions and Instrumentation used for GPEC testing:

i. Thermo Scientific Dionex Ultimate 3000 Series HPLC
ii. Corona Veo Charged Aerosol detector - Evaporator (low setting)
iii. Column: Supelco Discovery C18, 150mm, 4.6 mm, 5 micron, 180A.
iv. Column temperature: 30°C
v. Injection volume: 10 microliters
vi. Gradient (Flow rate: 1 ml/min)

| Time (min) | H2O % | MeOH % | Isopropanol % |
|---|---|---|---|
| 0 | 80 | 20 | 0 |
| 2 | 80 | 20 | 0 |
| 2.1 | 40 | 20 | 40 |
| 22.1 | 0 | 20 | 80 |
| 35.0 | 0 | 20 | 80 |
| 35.1 | 80 | 20 | 0 |
| 41 | 80 | 20 | 0 |

GPEC Sample Preparation: PVB interlayer solid samples were dissolved in glacial acetic acid and extracts were used as they were (approximately 0.05 to 0.5 g in 10 ml acetic acid). The solutions were left at room temperature to dissolve overnight. Sample types included extracts of alcohol/water mixtures, plasticizer solutions, plasticizer/resin gels and pellet, resin or sheet samples.

GPEC Quantification: The relative concentration of resin (R) and plasticizer (Pz) are estimated based on relative area percentages using the following equation:

$$Pz/R = (a*Area\ plasticizer)/(Area\ resin)$$

where a is the response coefficient. The relative concentration of skin and core resins are estimated based on the relative area percentages:

$$\%\ core\ resin = (Area\ core\ resin)*100/(Area\ core\ resin + Area\ Skin\ resin)$$

$$\%\ Skin\ resin = (Area\ Skin\ resin)*100/(Area\ core\ resin + Area\ Skin\ resin)$$

The weight percent resin in a sample is determined by analysis of solutions of known resin concentration and determining a single point response factor or a linear calibration.

**Examples 1 to 8**

GPEC solubility tests were conducted by placing 0.1 g recycled PVB Flakes or PVB Pellets in a 20 mL scintillation vial with 15 ml of solvent mixture to form Samples 1 to 8. The recycled PVB Flakes had a trilayer structure, where the skin layer was high PVOH PVB resin containing about 18.7 wt.% PVOH and the core layer was a low PVOH PVB resin containing about 10.5% PVOH (which, on a resin only basis is about 11 wt.% low PVOH PVB resin and about 89 wt.% high PVOH PVB resin, or on a total weight basis is about 7 wt.% low PVOH PVB resin, about 63 wt.% high PVOH PVB resin and about 30 wt.% plasticizer). Both the core and the skin layers were plasticized with triethylene glycol di-(2-ethylhexonate) (3-GEH). The vial was capped and then placed on a shaker for 12 hours before sampling. The extract of each was analyzed using GPEC. Note that the extracts were filtered with a 0.5 micron filter regardless of its appearance (whether it was clear or hazy) and the filtered sample had to be clear for injection.

The % water for the low PVOH resin solubility cutoff points, beyond which resin with about 10.5 wt.% PVOH is no longer detectable with GPEC means, in each alcohol system were determined as follows:

Ethanol: more than about 20% water by weight;
Methanol: more than about 4% water by weight.

The % water for the high PVOH resin solubility cutoff points, beyond which high PVOH resin is no longer detectable with GPEC means, in each alcohol system were determined as follows:

Ethanol: more than about 35% water by weight;
Methanol: more than about 20% water by weight.

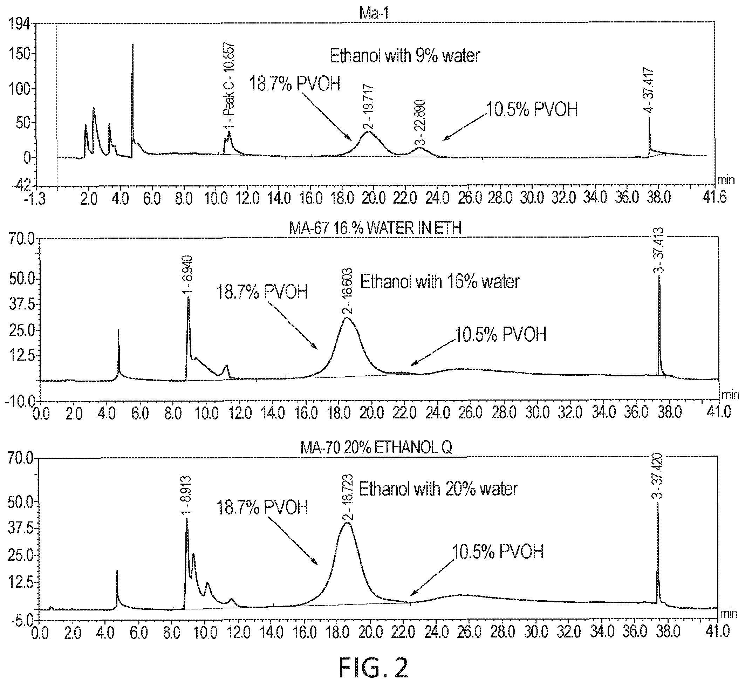

Table 1 and FIGs. 2 to 4 show the data for extracts of PVB for Samples 1 to 8 that were obtained using different solvent mixtures (having different levels of alcohol in water) that were analyzed using GPEC. Specifically, FIG. 2 shows GPEC chromatograms of recycled PVB in an ethanol and water mixture. The PVB mixture dissolved in ethanol with about 9 wt.% water shows both resins soluble in the mixture (top chart). As the water content in ethanol increased to about 16 wt.% water, the low PVOH PVB resin became less soluble but still detectable (middle chart). In ethanol with about 20 wt.% water, little low PVOH resin was detected (bottom chart).

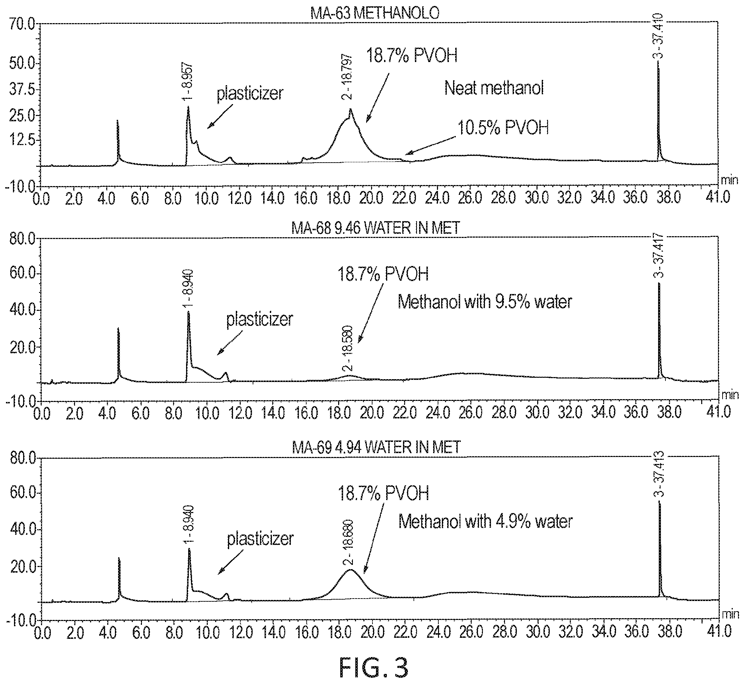

FIG. 3 shows GPEC chromatograms of recycled PVB in methanol water solutions. The interlayer mixture dissolved in neat methanol (no water added) shows some low PVOH resin still detectable (top chart). With about 9.5 wt.% water in methanol, the solubility of the high PVOH PVB resin becomes low relative to the plasticizer (middle chart). The methanol with about 4.9 wt.% water has little low PVOH PVB resin and good dissolution of high PVOH PVB resin (bottom chart).

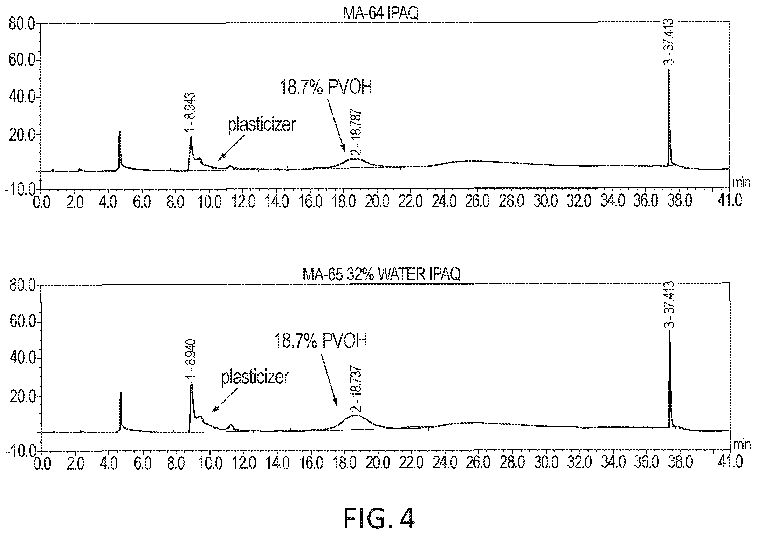

FIG. 4 shows GPEC chromatograms of recycled PVB in isopropanol and water mixtures. Both 100% isopropanol (top chart) and isopropanol with 32 wt.% water (bottom chart) show low solubility of high PVOH PVB relative to plasticizer.

The area % from the chromatograms in FIGs. 2 to 4 are summarized in Table 1. Measurement of the material is done on the high PVOH PVB (the extracted or dissolved portion).

**Table 1**

| Example Number | Wt. %water in alcohol | Alcohol Type | % High PVOH PVB | % Low PVOH PVB |
|---|---|---|---|---|
| 1 | 9 | Ethanol | 85 | 15 |
| 2 | 16 | Ethanol | 90 | 10 |
| 3 | 20 | Ethanol | 98 | 2 |
| 4 | 0 | Methanol | 97 | 3 |
| 5 | 4.9 | Methanol | 98 | 2 |
| 6 | 9.5 | Methanol | 100 | 0 |
| 7 | 0 | Isopropanol | 90 | 10 |
| 8 | 32 | Isopropanol | 90 | 10 |

FIGs. 2 to 4 and the data in Table 1 show the low PVOH and high PVOH percentages in the respective resins. Example 1 is a control example. Using about 9 wt.% of water in ethanol did not provide selective dissolution of the low PVOH PVB resin. Examples 2, 7 and 8 show that using only 16 wt.% water in ethanol (Example 2), or isopropanol (with 0% or 32% water in Examples 7 and 8 respectively) dissolved all of the high PVOH PVB resin and some of the low PVOH PVB resin into the extract. Examples 3, 4, 5 and 6 selectively dissolved the high PVOH PVB resin (relative to the low PVOH PVB resin) into the extract using selective dissolution with 20 wt.% water in ethanol (Example 3) or from 0 to 9.5 wt.% water in methanol Examples 4, 5 and 6). Stated differently, Examples 3, 4, 5 and 6 preferentially dissolved the high PVOH PVB resin relative to the low PVOH PVB resin, while Examples 2, 7 and 8 are not as selective as Examples 3, 4, 5 and 6.

**Dissolution/Filtration Method Using Pelletized Material**

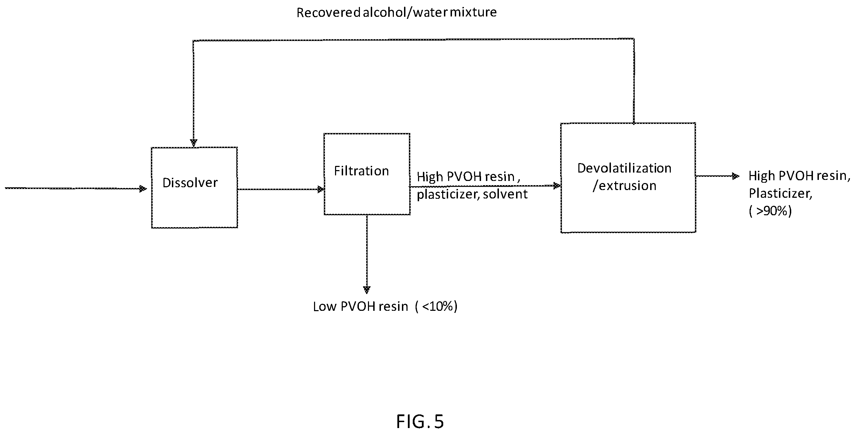

Based on the solubility study described above, a separation process using filtration after selective dissolution such as described in the flow chart in FIG. 5 was tested on both post-industrial and post-consumer recycled PVB interlayers in Examples 9 to 16 described below. The dissolution and filtration method is better suited to material with compositions well dispersed in the feed material, such as pelletized recycled multilayer PVB. The premixed material in the PVB Pellets resulted in visually hazy solutions where the domains of undissolved low PVOH PVB (core) resin are very small and stay in suspension. Mixtures containing 10% recycled PVB Pellets in their respective solvent combinations (shown below) were stirred for 2 hours at 50°C to yield viscous hazy suspensions. These visually hazy suspensions were defined as "before" samples in Table 2. Portions of the mixtures were then screened with a 1 mm strainer to collect the larger resin chips, and then further filtered using a lab scale 10 T filter (ErtelAlsop) with M-503 filter medium. The resulting samples were defined as "after" samples in Table 2. Both the unfiltered (before) and filtered (after) samples were further dried in an oven at 50°C for 2 hours before being pressed into sheet having a thickness of about 760 microns and laminated between two pieces of glass for haze measurement. Haze of the resulting material after removal of the solvents (i.e. drying) from the combined filtrates reflected varying degrees of undissolved material passing through during filtration (Table 2). Haze was measured on the laminated, dried material using a spectrophotometer using techniques known to one of skill in the art and as previously described.

**Example 9**

450 parts of ethanol containing 20% water was charged to a one liter three-neck jacketed glass reactor. To the stirred mixture, 50 parts of PVB Pellets were added and stirred for 2 hours at 50°C. The resulting mixture was poured into an aluminum tray and allowed to dry via evaporation in a ventilated hood until no weight loss was detectable. Then the material was further dried in an oven at 50°C for 2 hours before it was pressed into sheet having a thickness of 760 microns and laminated between two pieces of glass for haze measurement as a control. The haze value was 51.6.

**Example 10**

450 parts of ethanol containing 20% water was charged to a one liter three-neck jacketed glass reactor. To the stirred mixture, 50 parts of PVB Pellets were added and stirred for 2 hours at 50°C. The resulting mixture was then filtered using a lab 10 T filter with M-503 filter medium (ErtelAlsop) at 60 psi. The viscous solution filtrate was poured into an aluminum tray and allowed to dry via evaporation in a ventilated hood until no weight loss was detectable. Then the material was further dried in an oven at 50°C for 2 hours before it was pressed into sheet having a thickness of 760 microns and laminated between two pieces of glass for haze measurement. The haze value was 1.9.

**Example 11**

450 parts of methanol containing 4% water was charged to a one liter three-neck jacketed glass reactor. To the stirred mixture, 50 parts of PVB Pellets were added and stirred for 2 hours at 50°C. The resulting mixture was then filtered using a lab 10 T filter with M-503 filter medium (ErtelAlsop) at 60 psi. The viscous solution filtrate was poured into an aluminum tray and allowed to dry via evaporation in a ventilated hood until no weight loss was detectable. Then the material was further dried in an oven at 50°C for 2 hours before it was pressed into sheet having a thickness of 760 microns and laminated between two pieces of clear glass for haze measurement. The haze value was 17.7.

**Example 12**

450 parts of ethanol containing 20% water was charged to a one liter three-neck jacketed glass reactor. To the stirred mixture, 50 parts of PVB Pellets were added and stirred for 12 hours at room temperature. The resulting mixture was then filtered using a lab 10 T filter with M-503 filter medium (ErtelAlsop) at 60 psi. The viscous solution filtrate was poured into an aluminum tray and allowed to dry via evaporation in a ventilated hood until no weight loss was detectable. Then the material was further dried in an oven at 50°C for 2 hours before it was pressed into sheet having a thickness of 760 microns and laminated between two pieces of glass for haze measurement. The haze value was 11.8.

Table 2 shows the type of PVB material used, the solvent, and the haze values of Examples 9 to 12 described above.

**Table 2**

| Example Number | | | | Haze% |
|---|---|---|---|---|
| Example 9 | PVB Pellets | before | 20% water in ethanol | 51.6 |
| Example 10 | PVB Pellets | after | 20% water in ethanol | 1.9 |
| Example 11 | PVB Pellets | after | 4% water in methanol | 17.7 |
| Example 12 | PVB Pellets | after | 20% water in ethanol | 11.8 |

Table 2 shows that there is a significant reduction in haze from the original (before) samples to the recovered (after) samples where the low PVOH PVB has been removed by the process of the invention. Comparing Example 9 to Examples 10, 11 and 12 show that using the process of the invention significantly reduced the haze when using a solvent of either ethanol and water or methanol and water.

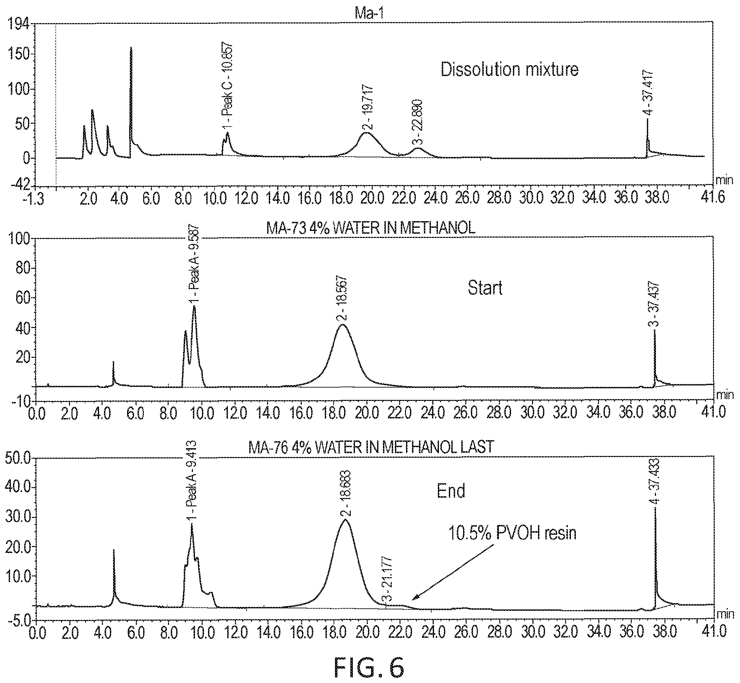

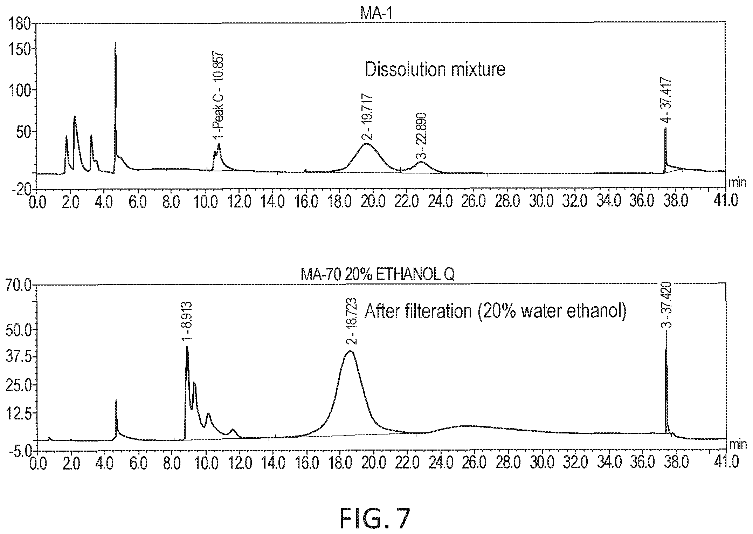

Samples before and after filtration were also analyzed using GPEC as shown in FIGs. 6 and 7. In some cases, passing through of the undissolved resin was observable as seen in the end filtrate in FIG. 6. FIG. 6 shows GPEC chromatograms of a suspension sample after dissolution of 10% PVB Pellets of Example 11 with methanol with 4 wt.% water (top chart). The starting filtration sample showed no detectable low PVOH PVB resin (middle chart). The end filtrate sample showed some low PVOH PVB resin passing through the filter medium (bottom chart). FIG. 7 shows GPEC chromatograms of a suspension sample after dissolution of 10% PVB Pellets of Example 10 in ethanol with 20 wt.% water (top chart), and the combined filtrates (bottom chart). The overall filtered material was combined.

**Extraction/Straining Method Using Trilayer Interlayer**

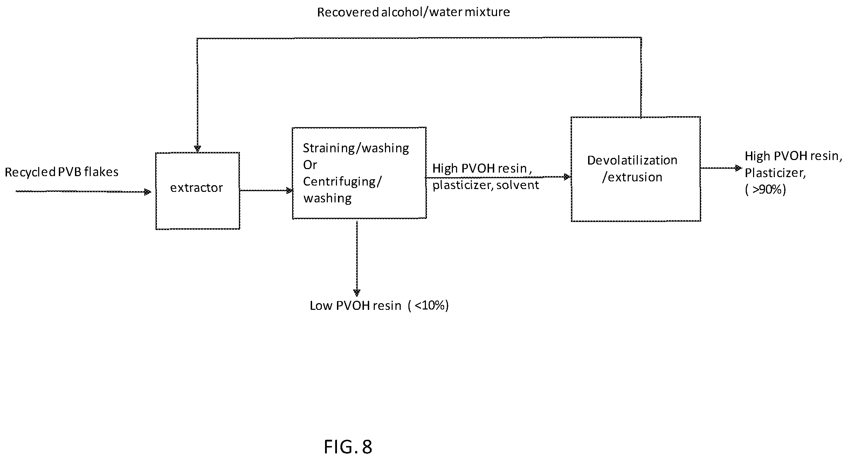

The extraction approach is more appropriate for feeds that are still in layered forms such as comminuted multilayer interlayer material (i.e., PVB Flakes that are small pieces of the multilayer material, such as the sheet, that have been chopped or cut into smaller pieces) in which the undissolved material can maintain a certain form and size during the operations so that it can be readily separated from the extracts using a coarse screen. The general process is depicted in FIG. 8. The extraction part or step is typically carried out at ambient conditions and generally involves at least three extraction steps for good separation. The extracts and undissolved resin can be readily separated using a very coarse screen.

**Example 13**

800 parts of water was charged to a one liter three-neck jacketed glass reactor. To the stirred mixture, 0.5 part citric acid, 4 parts sulfuric acid and 200 parts of flakes of ½ inch cut from Recycle PVB1 were added and stirred for 1 hour at 50°C. The resulting flakes were poured into a strainer with a 1 mm screen and rinsed with tap water. The washed flakes were poured into an aluminum tray and allowed to dry via evaporation in a ventilated hood until no weight loss is detectable. Then the material was further dried in an oven at 50°C for 2 hours for subsequent use.

**Example 14**

450 parts of ethanol containing 20% water was charged to a one liter three-neck jacketed glass reactor. To the stirred mixture, 50 parts of dried Recycle PVB1 flakes from Example 13 were added and stirred for 2 hours at 50°C. The resulting mixture was divided into two portions. One portion was poured into an aluminum tray and allowed to dry via evaporation in a ventilated hood until no weight loss was detectable. Then the material was further dried in an oven at 50°C for 2 hours before it was pressed into sheet having a thickness of 760 microns and laminated between two pieces of glass for haze measurement as a control (before sample). The second portion was filtered using a lab 10 T filter with M-503 filter medium (ErtelAlsop) at 60 psi. The viscous solution filtrate was poured into an aluminum tray and allowed to dry via evaporation in a ventilated hood until no weight loss was detectable. Then the material was further dried in an oven at 50°C for 2 hours before it was pressed into sheet having a thickness of 760 microns and laminated between two pieces of glass for haze measurement. The haze value was 13.7.

**Example 15**

The process described above for Example 13 was repeated using flakes of ½ inch cut from Recycle PVB2 instead of Recycle PVB1. The resulting material was dried for subsequent use in Example 16.

**Example 16**

The process described above for Example 14 was repeated using the material obtained in Example 15.

Table 3 below shows the PVB material used, the solvent, and the haze values of Examples 13 to 16 described above.

**Table 3**

| Example Number | | | | Haze% |
|---|---|---|---|---|
| Example 13 | PVB Recycle1 | before | 20% water in ethanol | 28.5 |
| Example 14 | PVB Recycle1 | after | 20% water in ethanol | 13.7 |
| Example 15 | PVB Recycle2 | before | 20% water in ethanol | 11.7 |
| Example 16 | PVB Recycle 2 | after | 20% water in ethanol | 3.4 |

Table 3 shows that there is a significant reduction in haze from the original (before) samples to the recovered (after) samples where the low PVOH PVB has been removed by the process of the invention. Comparing Example 13 to Example 14, using the process of the invention, haze was reduced from 28.5% to 13.7%. Similarly, comparing Examples 15 and 16, haze was reduced from 11.7% to 3.4%.

**Example 17**

450 parts of 190 proof ethanol (about 9 wt.% water in ethanol) was charged to a one liter three-neck jacketed glass reactor. To the stirred mixture, 50 parts of PVB Flakes (1.72 cm (½ inch) pieces) were added and stirred for 12 hours at ambient temperature (about 22 to 23°C). The resulting mixture was poured into an aluminum tray and allowed to dry via evaporation in a ventilated hood until no weight loss was detectable. Then the material was further dried in an oven at 40°C for 12 hours before it was pressed into sheet having a thickness of 760 microns and laminated between two pieces of glass to yield a haze of 61.3%. GPEC analysis showed the resin composition of the material to be about 89 wt.% high PVOH (skin) resin and 11 wt.%

**Example 18**

450 parts of 20 wt.% water containing ethanol was charged to a one liter three-neck jacketed glass reactor. To the stirred mixture, 50 parts of PVB Flakes (1.72 cm (½ inch) cut but no smaller than 8 mesh) were added and stirred for 3 hours at ambient temperature (about 22 to 23°C). The resulting mixture was filtered with a strainer of 1 mm screen. The filtrates were poured into an aluminum tray and allowed to dry via evaporation in a ventilated hood until no weight loss was detectable. Then the material was further dried in an oven at 40°C for 12 hours to yield 38.42 parts of PVB with 46.9 phr plasticizer. The resulting PVB was pressed into sheet having a thickness of 760 microns and laminated between two pieces of clear glass to yield an interlayer having a haze of 4.2%. The material on the screen yielded 12 parts after drying and GPEC analysis showed the resin composition of the material on the screen to be about 31 wt.% high PVOH (skin) resin and 69 wt.% low PVOH (core) resin with 25 phr of plasticizer. Most of the high PVOH material was removed and the filtered material (Example 18) had significantly less high PVOH PVB resin than the starting material in Example 17. Additionally, the resulting material in Example 18 had a significantly reduced haze level.

**Example 19**

50 parts of PVB Flakes were added to 450 parts of ethanol containing 20 wt.% water. The mixture was stirred for 4 hours and the supernatant was decanted. Fresh solvent of 450 parts (of 20 wt.% water in ethanol) was added to the remaining flakes and stirred for 4 hours. The above process was repeated one more time. The extracted flakes after evaporation yielded 3.8 parts dried resin and the combined extracts after evaporation yielded 46 parts of a high PVOH resin and plasticizer mixture, showing a very high yield of separation using this technique and the ethanol water mixture. Stirring for a longer time period dissolves more of the high PVOH PVB resin for separation and removal from the low PVOH PVB resin.

Low PVOH PVB resin can also be separated from the solution using centrifugation. First, the interlayers are treated with a solvent system that dissolves only one of the two resins in the mixture and then the resulting suspension is subjected to centrifugation to promote separation. Complete removal or partial removal of one component can help reduce haze for recycling.

## Example 20

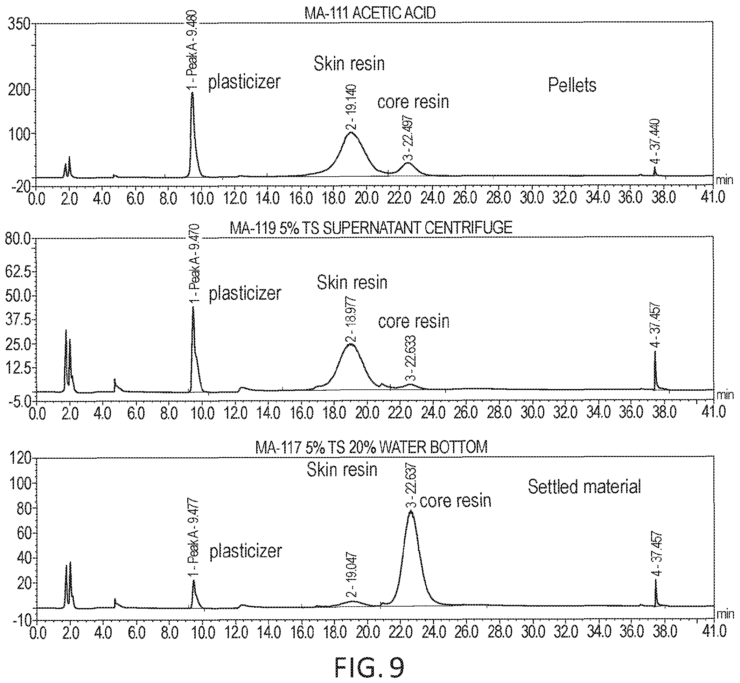

PVB Pellets were treated with 165 to 174 proof alcohol (methanol with about 5 wt.% of water). The mixtures were stirred for a few hours to yield viscous suspensions. Centrifugation of the suspensions yielded supernatants and sediments. The supernatant was predominantly composed of high PVOH PVB (skin) resin and plasticizer. The sediment was more enriched with low PVOH PVB (core) resin. FIG. 9 shows GPEC chromatograms of starting PVB Pellets (top chart), supernatants (middle chart), and sediment material (bottom chart). Centrifugation of 5% wt. PVB Q material in 170 proof alcohol leads to about a 60% reduction of low PVOH PVB (core) resin in the supernatant, and the sediment material is predominantly low PVOH PVB (core) resin.

## Example 21

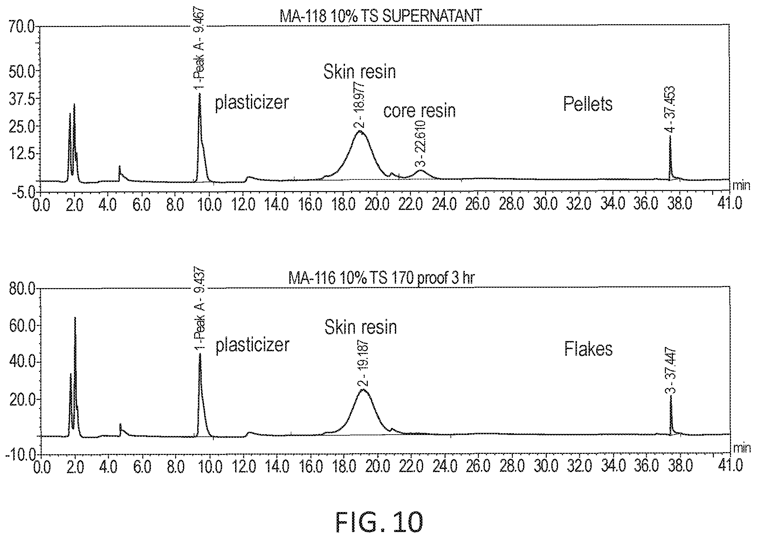

When PVB Pellets are used as a feed, the separation of the high PVOH PVB resin and low PVOH PVB resin is not as clean as using shredded PVB Flakes due to the fact that in the PVB Pellets, the two resins (core and skin) were premixed and the undissolved material forms much finer suspended particles that are more difficult to separate using centrifuge. FIG. 10 shows GPEC chromatograms of supernatants of PVB Pellets (top) and supernatants of PVB Flakes (bottom), both after centrifugation. Centrifugation of 10% wt. PVB Pellets in 170 proof ethanol shows 36% reduction of low PVOH PVB (core) resin in the supernatant. For comparison, centrifugation of 10% wt. PVB Flakes in 170 proof ethanol shows very little low PVOH PVB (core) resin remaining in the supernatant.

## Example 22

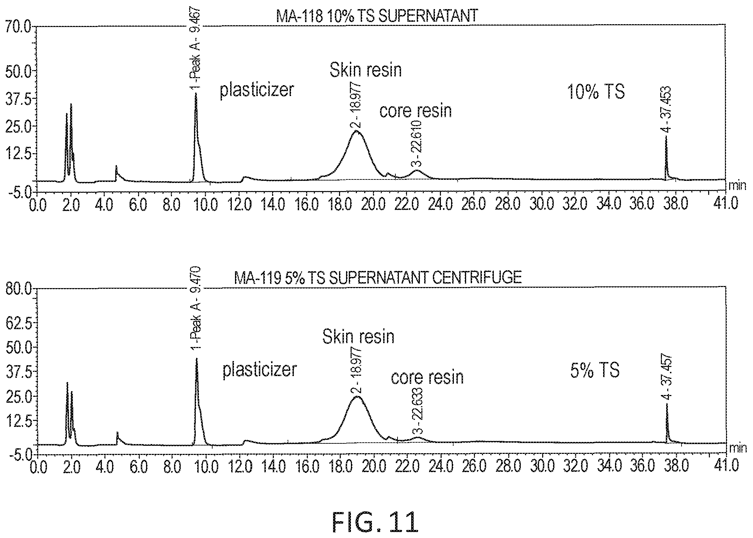

For suspensions made from extruded PVB Pellets, the separation efficiency between the supernatants and suspended material becomes reduced as the total percent solids (TS%) increases. In FIG. 11, GPEC chromatograms of supernatants of 10% PVB Pellets in 165 proof ethanol after centrifugation (top chart) shows a 36% reduction of low PVOH PVB (core) resin. Supernatants of 5% PVB Pellets in 170 proof ethanol after centrifugation (bottom chart) show a 60% reduction of low PVOH PVB (core) resin. Reducing the total solids level from 10% to 5% almost doubles the reduction or removal of the low PVOH PVB resin.

## Example 23

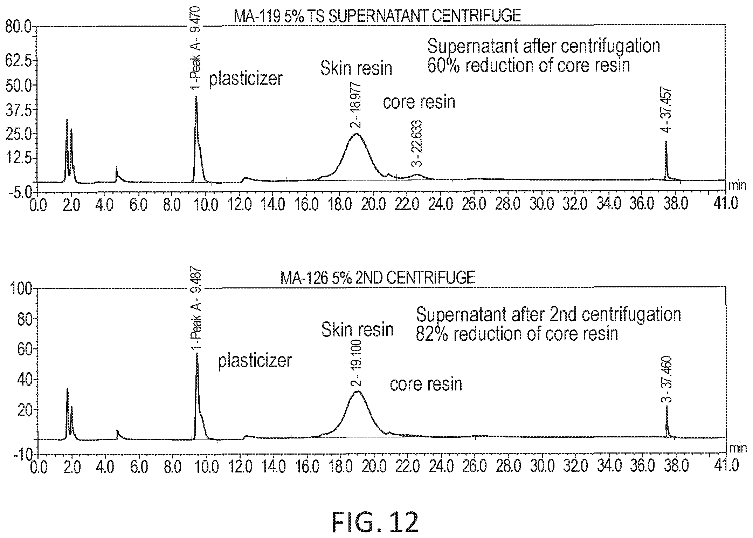

450 parts of 20% water containing ethanol was charged to a one liter three-neck jacketed glass reactor. To the stirred mixture, 25 parts of PVB Pellets were added and stirred for 3 hours at ambient temperature (about 22 to 23°C). The resulting mixture was centrifuged for 40 minutes at 4200 rpm. The resulting supernatant and sediment material were analyzed using GPEC. The supernatant layer showed 60% reduction of low PVOH PVB (core) resin (see FIG. 12, top chart). Upon repeating the centrifugation procedure above, the supernatants yielded 82% reduction of low PVOH PVB (core) resin according to GPEC (see FIG. 12, bottom chart).

## Example 24

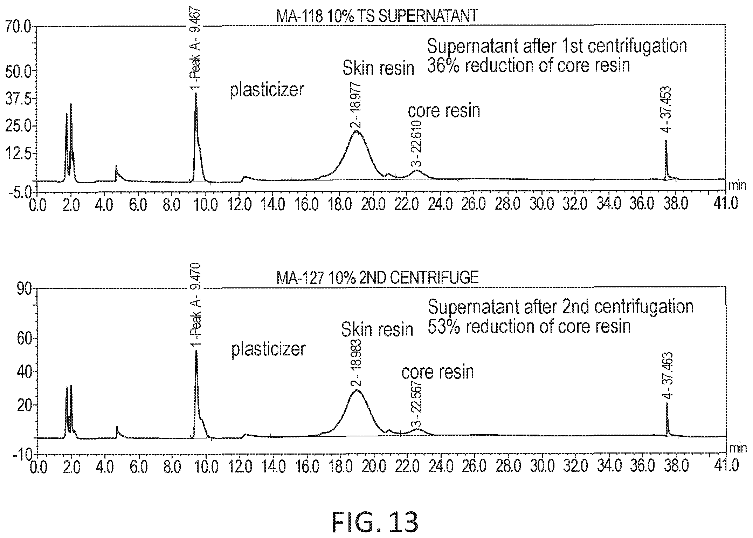

450 parts of 24% water containing ethanol was charged to a one liter three-neck jacketed glass reactor. To the stirred mixture, 50 parts of PVB pellets were added and stirred for 3 hours at ambient temperature (about 22 to 23°C). The resulting mixture was centrifuged. The resulting supernatant and sediment material were analyzed using GPEC. The supernatant layer showed 36% reduction of low PVOH PVB (core) resin (see FIG. 13, top chart). Upon repeating the centrifugation procedure above, the supernatants yielded 53% reduction of low PVOH PVB (core) resin according to GPEC (see FIG. 13, bottom chart).

Further separation can be achieved with additional centrifugation regardless of the total solids level. For example, as discussed above and shown in FIGs. 12 and 13, a second centrifugation step increased the low PVOH PVB (core) resin reduction from 60 to 82% for material with a 5% starting total solids, and from 36 to 53% for material starting with a 10% total solids cases, respectively (Examples 23 and 24, respectively) suggesting multistage or continuous centrifugation can further improve the separation of the high PVOH and low PVOH PVB resins.

## Example 25

450 parts of 20% water containing ethanol was charged to a one liter three-neck jacketed glass reactor. To the stirred mixture, 50 parts of PVB Flakes no smaller than 8 mesh were added and stirred for 3 hours at ambient temperature (about 22 to 23°C). The resulting mixture was centrifuged. The supernatants were poured into an aluminum tray and allowed to dry via evaporation in a ventilated hood until no weight loss was detectable. Then the material was further dried in an oven at 40°C for 12 hours to yield 41.5 parts of PVB with 45.5 phr plasticizer. The material was pressed into sheet having a thickness of about 760 microns and laminated between two pieces of clear glass and tested for haze. The haze measured was 3.6 %. The combined settled material yielded 8 parts after drying and GPEC analysis showed the resin composition of 33% high PVOH PVB (skin) resin and 67% low PVOH PVB (core) resin with 22.1 phr of plasticizer.

**Example 26**

450 parts of 9% water containing ethanol was charged to a one liter three-neck jacketed glass reactor. To the stirred mixture, 50 parts of PVB Flakes were added and stirred for 3 hours at ambient temperature (about 22 to 23°C). The resulting mixture was not centrifuged but was poured into an aluminum tray and allowed to dry via evaporation in a ventilated hood until no weight loss was detectable. Then the material was further dried in an oven at 40°C for 12 hours and then pressed into a sheet having a thickness of about 760 microns. The sheet was then laminated between two pieces of clear glass, and haze was measured. The resulting haze was 51.6%.

The above shows that dissolution can be combined with centrifugation to provide another method of separating the high and low PVOH PVB resins.

**Claims**

1.    A method of recovering poly(vinyl butyral) (PVB), said method comprising the steps of:

(a) providing a solvent to a reclamation system;
(b) adding recycled PVB to the solvent and stirring to form a PVB mixture, wherein the PVB mixture comprises a liquid portion comprising dissolved high PVOH PVB resin and plasticizer, and a solid portion comprising low PVOH PVB solids; and
(c) filtering the PVB mixture to remove the low PVOH PVB solids;

wherein the solvent added during step (a) comprises a mixture of water and alcohol and wherein the alcohol is ethanol and the water is present in an amount of from 16 weight percent to 24 weight percent or from 20 weight percent to 24 weight percent, or wherein the solvent added during step (a) comprises a mixture of water and alcohol and wherein the alcohol is methanol, and the water is present in an amount of from 4 weight percent to 6 weight percent.

2.    The method of claim 1, wherein in step (c) the removed low PVOH solids comprise residual high PVOH PVB resin and plasticizer.

3.    The method of claim 1 or claim 2, wherein the removed low PVOH PVB solids comprise residual high PVOH PVB resin and plasticizer, and further comprising a step (d) of separating the residual high PVOH PVB resin and plasticizer from the low PVOH PVB solids, preferably
wherein the step (d) separating comprises washing the low PVOH PVB resin, or wherein the step (d) separating comprises adding the solvent to the low PVOH PVB resin to further dissolve and remove the high PVOH PVB resin and plasticizer.

4.    The method of any of claims 1 to 3, further comprising a step (e) measuring the level of plasticizer and high PVOH PVB in the low PVOH PVB solids, preferably further comprising repeating the steps (a) to (e).

5.    The method of any of claims 1 to 4, wherein at least 80% (85%, 90%, 95%, 96%, 97%, 98%, 99% or more) of the high PVOH PVB resin is removed from the recycled PVB.

6.    The method of any of claims 1 to 5, wherein step (b) comprises stirring at a temperature from 5°C to 60°C (5°C to 50°C, 5°C to 40°C, 5°C to 30°C, 5°C to 20°C, 5°C to 10°C).

7.    The method of any of claims 1 to 6, wherein the recycled PVB is in the form of PVB pellets, or wherein the recycled PVB is in the form of PVB flakes or pieces of PVB film or sheet, or wherein the recycled PVB is in the form of PVB flakes or pieces of PVB film or sheet and PVB pellets, or wherein the recycled PVB has a diameter of from 2 to 20 millimeters.

8. The method of any of claims 1 to 7, wherein the reclamation system to which the recycled PVB is provided in step (a) comprises a batch reactor system.

9. The method of any of claims 1 to 8, wherein the reclamation system to which the recycled PVB is provided in step (a) comprises a continuous reclamation system, or wherein the reclamation system to which the recycled PVB is provided in step (a) comprises a continuous reclamation system and wherein the continuous reclamation system is a continuous stirred-tank reactor.

10. The method of any of claims 1 to 9, wherein the recycled PVB is added to the solvent in an amount of at least 1 wt.% (5 wt.%, 10 wt.%, 15 wt.%, 20 wt.% or more).

**Patentansprüche**

1. Verfahren zur Rückgewinnung von Poly(vinylbutyral) (PVB), wobei das Verfahren die folgenden Schritte umfasst:

   (a) Bereitstellen eines Lösungsmittels für ein Rückgewinnungssystem;
   (b) Hinzufügen von recyceltem PVB zu dem Lösungsmittel und Rühren, um eine PVB-Mischung zu bilden, wobei die PVB-Mischung einen flüssigen Anteil, der gelöstes PVOH-armes PVB-Harz und Weichmacher umfasst, und einen festen Anteil, der PVOH-arme PVB-Feststoffe umfasst, umfasst; und
   (c) Filtern der PVB-Mischung, um die PVOH-armen PVB-Feststoffe zu entfernen;

   wobei das während Schritt (a) hinzugefügt wird, eine Mischung aus Wasser und Alkohol umfasst, wobei der Alkohol Ethanol ist und das Wasser in einer Menge von 16 Gewichtsprozent bis 24 Gewichtsprozent oder von 20 Gewichtsprozent bis 24 Gewichtsprozent vorliegt, oder wobei das während Schritt (a) hinzugefügte Lösungsmittel eine Mischung aus Wasser und Alkohol umfasst, wobei der Alkohol Methanol ist und das Wasser in einer Menge von 4 Gewichtsprozent bis 6 Gewichtsprozent vorliegt.

2. Verfahren nach Anspruch 1, wobei in Schritt (c) die entfernten PVOH-Feststoffe mit niedrigem PVOH-Gehalt Rest-PVOH-PVB-Harz mit hohem PVOH-Gehalt und Weichmacher umfassen.

3. Verfahren nach Anspruch 1 oder Anspruch 2, wobei die entfernten PVOH-PVB-Feststoffe mit niedrigem PVOH-Gehalt Rest-PVOH-PVB-Harz mit hohem PVOH-Gehalt und Weichmacher umfassen, und ferner einen Schritt (d) des Abtrennens des restlichen PVOH-PVB-Harzes mit hohem PVOH-Gehalt und des Weichmachers von den PVB-Feststoffen mit niedrigem PVOH-Gehalt umfasst wobei vorzugsweise der Schritt (d) des Abtrennens das Waschen des PVB-Harzes mit niedrigem PVOH-Gehalt umfasst oder wobei der Schritt (d) des Abtrennens das Hinzufügen des Lösungsmittels zu dem PVB-Harz mit niedrigem PVOH-Gehalt umfasst, um das PVB-Harz mit hohem PVOH-Gehalt und den Weichmacher weiter aufzulösen und zu entfernen.

4. Verfahren nach einem der Ansprüche 1 bis 3, das ferner einen Schritt (e) zum Messen des Gehalts an Weichmacher und PVOH PVB mit hohem PVOH-Gehalt in den PVB-Feststoffen mit niedrigem PVOH-Gehalt umfasst, vorzugsweise ferner umfassend das Wiederholen der Schritte (a) bis (e).

5. Verfahren nach einem der Ansprüche 1 bis 4, wobei mindestens 80 % (85 %, 90 %, 95 %, 96 %, 97 %, 98 %, 99 % oder mehr) des PVOH-PVB-Harzes mit hohem PVOH-Gehalt aus dem recycelten PVB entfernt werden.

6. Verfahren nach einem der Ansprüche 1 bis 5, wobei Schritt (b) das Rühren bei einer Temperatur von 5 °C bis 60 °C (5 °C bis 50 °C, 5 °C bis 40 °C, 5 °C bis 30 °C, 5 °C bis 20 °C, 5 °C bis 10 °C) umfasst.

7. Verfahren nach einem der Ansprüche 1 bis 6, wobei das recycelte PVB in Form von PVB-Granulat vorliegt oder wobei das recycelte PVB in Form von PVB-Flocken oder Stücken von PVB-Folie oder -Platten vorliegt oder wobei das recycelte PVB in Form von PVB-Flocken oder Stücken von PVB-Folie oder -Platten und PVB-Granulat vorliegt, oder wobei das recycelte PVB einen Durchmesser von 2 bis 20 Millimetern aufweist.

8. Verfahren nach einem der Ansprüche 1 bis 7, wobei das Rückgewinnungssystem, dem das recycelte PVB in Schritt (a) zugeführt wird, ein Chargenreaktorsystem umfasst.

9. Verfahren nach einem der Ansprüche 1 bis 8, wobei das Rückgewinnungssystem, dem das recycelte PVB in Schritt (a) zugeführt wird, ein kontinuierliches Rückgewinnungssystem umfasst, oder wobei das Rückgewinnungssystem, dem das recycelte PVB in Schritt (a) zugeführt wird, ein kontinuierliches Rückgewinnungssystem umfasst und wobei das kontinuierliche Rückgewinnungssystem ein kontinuierlicher Rührkesselreaktor ist.

10. Verfahren nach einem der Ansprüche 1 bis 9, wobei das recycelte PVB dem Lösungsmittel in einer Menge von mindestens 1 Gew.-% (5 Gew.-%, 10 Gew.-%, 15 Gew.-%, 20 Gew.-% oder mehr) zugesetzt wird.

**Revendications**

1. Procédé de récupération de poly (vinylbutyral) (PVB), ledit procédé comprenant les étapes suivantes :

   (a) la fourniture d'un solvant à un système de récupération ;
   (b) l'ajout de PVB recyclé au solvant et l'agitation pour former un mélange de PVB, dans lequel le mélange de PVB comprend une partie liquide constituée de résine de PVB à haute teneur en PVOH et de plastifiant dissous, et une partie solide constituée de solides de PVB à faible teneur en PVOH ; et
   (c) la filtration du mélange de PVB pour séparer les solides de PVB à faible teneur en PVOH ;

   dans lequel le solvant ajouté pendant l'étape (a) comprend un mélange d'eau et d'alcool et dans lequel l'alcool est de l'éthanol et l'eau est présente en une quantité de 16 pour cent en poids à 24 pour cent en poids ou de 20 pour cent en poids à 24 pour cent en poids, ou dans lequel le solvant ajouté pendant l'étape (a) comprend un mélange d'eau et d'alcool et dans lequel l'alcool est du méthanol et l'eau est présente en une quantité de 4 pour cent en poids à 6 pour cent en poids.

2. Procédé selon la revendication 1, dans lequel, à l'étape (c), les solides à faible teneur en PVOH séparés comprennent de la résine de PVB à haute teneur en PVOH et du plastifiant résiduels.

3. Procédé selon la revendication 1 ou la revendication 2, dans lequel les solides de PVB à faible teneur en PVOH séparés comprennent de la résine de PVB à haute teneur en PVOH et du plastifiant résiduels, et comprenant également une étape (d) de séparation de la résine de PVB à haute teneur en PVOH et du plastifiant résiduels des solides de PVB à faible teneur en PVOH, de préférence
dans lequel l'étape (d) de séparation comprend le lavage de la résine de PVB à faible teneur en PVOH, ou dans lequel l'étape (d) de séparation comprend l'ajout du solvant à la résine de PVB à faible teneur en PVOH pour dissoudre et séparer davantage la résine de PVB à teneur élevée en PVOH et le plastifiant.

4. Procédé selon l'une quelconque des revendications 1 à 3, comprenant également une étape (e) de mesure du niveau de plastifiant et de PVB à haute teneur en PVOH dans les solides de PVB à faible teneur en PVOH, comprenant de préférence également la répétition des étapes (a) à (e).

5. Procédé selon l'une quelconque des revendications 1 à 4, dans lequel au moins 80 % (85 %, 90 %, 95 %, 96 %, 97 %, 98 %, 99 % ou plus) de la résine de PVB à haute teneur en PVOH est séparée du PVB recyclé.

6. Procédé selon l'une quelconque des revendications 1 à 5, dans lequel l'étape (b) comprend l'agitation à une température de 5 °C à 60 °C (5 °C à 50 °C, 5 °C à 40 °C, 5 °C à 30 °C, 5 °C à 20 °C, 5 °C à 10 °C).

7. Procédé selon l'une quelconque des revendications 1 à 6, dans lequel le PVB recyclé est sous forme de granulés de PVB, ou dans lequel le PVB recyclé est sous forme de flocons de PVB ou de morceaux de film ou de feuille de PVB, ou dans lequel le PVB recyclé est sous forme de flocons de PVB ou de morceaux de film ou de feuille de PVB et de granulés de PVB, ou dans lequel le PVB recyclé a un diamètre de 2 à 20 millimètres.

8. Procédé selon l'une quelconque des revendications 1 à 7, dans lequel le système de récupération auquel le PVB recyclé est fourni à l'étape (a) comprend un système de réacteur discontinu.

9. Procédé selon l'une quelconque des revendications 1 à 8, dans lequel le système de récupération auquel le PVB recyclé est fourni à l'étape (a) comprend un système de récupération continu, ou dans lequel le système de récupération auquel le PVB recyclé est fourni à l'étape (a) comprend un système de récupération continu et dans lequel le système de récupération continu est un réacteur à cuve agitée continue.

10. Procédé selon l'une quelconque des revendications 1 à 9, dans lequel le PVB recyclé est ajouté au solvant en une quantité d'au moins 1 % en poids (5 % en poids, 10 % en poids, 15 % en poids, 20 % en poids ou plus).

EP 4 423 181 B1

| S1 | Providing a Solvent or Solvent Mixture to a Reclamation System and Stirring |
|---|---|
| S2 | Recycle PVB Material is Provided to the Reclamation System and Stirred to Form a Mixture |
| S3 | PVB Mixture is Stirred for a Time and Temperature to Extract or Dissolve High PVOH PVB and Plasticizer from PVB Mixture |
| S4 | After Stirring and Extraction/Dissolution, the PVB Mixture is Filtered or Strained to Remove Low PVOH PVB Solids |
| S5 | Level of Plasticizer and High PVOH PVB in Low PVOH PVB Solids is Measured to Determine if Further Reclamation is Necessary |
| S6 | Either or both the dried Low PVOH PVB polymer or dissolved High PVOH PVB solution can be further processed |

FIG. 1

FIG. 2

EP 4 423 181 B1

FIG. 3

FIG. 4

EP 4 423 181 B1

Recovered alcohol/water mixture

```
                  ┌────────────────────────────────────────────────────────┐
                  │                                                        │
                  ▼                                                        │
          ┌──────────────┐      ┌──────────────┐                  ┌──────────────────┐
──────────▶│              │      │              │  High PVOH resin,│                  │────▶ High PVOH resin,
          │   Dissolver  │─────▶│  Filtration  │─────────────────▶│ Devolatilization │     Plasticizer,
          │              │      │              │  plasticizer,    │   /extrusion     │     ( >90%)
          └──────────────┘      └──────────────┘  solvent         └──────────────────┘
                                       │
                                       ▼
                              Low PVOH resin ( <10%)
```

FIG. 5

FIG. 6

FIG. 7

FIG. 8

FIG. 9

FIG. 10

FIG. 11

FIG. 12

FIG. 13

FIG.14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5340654 A
- US 5190826 A
- US 7510771 B
- US 2009209667 A1